# EUROPEAN PATENT SPECIFICATION

(11) **EP 2 508 845 B1**
(45) Date of publication and mention of the grant of the patent: **02.09.2015**
(21) Application number: 09851850.9
(22) Date of filing: 02.12.2009
(51) Int. Cl.: G01C 21/20, G01C 21/32

(54) **DEVICE, SYSTEM, METHOD AND PROGRAM FOR CREATING A BICYCLE MAP**
VORRICHTUNG, SYSTEM, VERFAHREN UND PROGRAM ZUM ERSTELLEN EINER FAHRRADKARTE
DISPOSITIF, SYSTÈME, PROCÉDÉ ET PROGRAMME POUR CRÉER UNE CARTE CYCLISTE

(43) Date of publication of application: 10.10.2012
(73) Proprietor: Pioneer Corporation, Kanagawa 212-0031 (JP)
(72) Inventor: FUJITA Ryujiro, Kawasaki-shi Kanagawa 21-0031 (JP)
(74) Representative: Sajda, Wolf E.
(86) International application number: PCT/JP2009/070258
(87) International publication number: WO 2011/067842

(56) References cited:
- JP-A- 2002 081 951
- JP-A- 2003 148 985
- US-A- 6 002 982
- US-A1- 2004 039 522
- US-A1- 2006 136 173
- US-A1- 2008 009 275
- US-A1- 2008 082 254
- US-A1- 2009 063 049

## Description

### Technical Field

The present invention relates to an information processing apparatus, an information processing system, an information processing method and a bicycle map.

### Background Art

In recent years, bicycle racing called Cycle Sport has been popular both domestically and internationally, as one of sport activities. As types of bicycle racing, track racing, off-road racing and road racing have been known. Here, track racing known as keirin, sprint and so forth, is a race where racers run along a circular racing track. Off-road racing is a race where racers run on unpaved roads and slops of mountain forests using bicycles such as mountain bikes.

Then, road racing is a race where racers run on paved roads over several dozen kilometers to several hundred kilometers. For example, stage race such as cycle road race hosted by Japan Bicyclist Club federation and Tour de France, is known as types of road racing. In addition, as another type of road racing, there is hill climbing held on uphill slopes over the entire route, using road bikes.

Cyclists who participate in these races include professionals entering races with prize money, semiprofessionals belonging to business organizations, amateurs, so called recreational cyclists, who make positive efforts to participate in races by doing daily training. In addition to the above-described cyclists who participate in official races, there are many general cyclists, for example, who commute to their office, enjoying cycling with a professional road bike, and who go for an outing to suburbs, enjoying long-distance cycling on holidays such as weekends.

For the above-described cyclists, it is important to find travel routes, which are fit for respective objects and allow the cyclists to do effective training and delightful cycling. For example, a cyclist doing training to participate in road racing may want to run on paved roads in the suburbs. This is why such roads allow continuous running over a long distance more than several kilometers, although the cyclist could not wish to continue to run over several dozen kilometers to several hundred kilometers. Meanwhile, a cyclist who enjoys delightful cycling on holidays may want to run on flat roads which are not crowded and noisy, enjoying beautiful scenery and clean air as possible.

For example, when a cyclist seeks a comfortable cycling road in an unfamiliar place, he may want to search for a local famous cycling road frequently used by the local cyclists, if possible. Therefore, conventionally, cyclists have guessed appropriate travel routes on maps such as a road map and tried the roads. Also cyclists have received information from acquaintances and obtained information via media such as Internet and so forth.

However, collecting information through these methods has limitations, and more comfortable travel routes are likely to be missed. Therefore, there is an increasing demand for more extensively collecting information to meet the requests from cyclists. Here, various technologies for searching appropriate travel routes have been known, although they are not targeted for bicycles but for cars (see, for example, Patent Literatures 1 to 5).

Patent Literature 1 discloses a car route guidance apparatus configured to use past driving conditions. A technical feature of the apparatus is to calculate a degree of familiarity about roads according to the number of runs on the roads to a destination in the past, and performs route search by preferentially selecting a road familiar to the driver.

In addition, Patent Literature 2 discloses a car navigation apparatus configured to accumulate the running paths of the car as path data to use for route search.

A technical feature of the apparatus is to search for the route between two points input based on track data indicating the number of times cars pass crossovers or links and so forth.

Moreover, Patent Literature 3 discloses a navigation apparatus configured to provide guidance using the past running history of a car (for example, the number of runs of a car within a predetermined range). A technical feature of the apparatus is to determine the frequency of running based on the past running history to provide predefined navigation according to the frequency.

Moreover, Patent Literature 4 discloses an information creating system configured to create information about bypass routes frequently used by the local users. A technical feature of the apparatus is to acquire running track information from a plurality of cars via communication means, and calculate, for each link, an amount of running of the local cars and an amount of running of the cars from the outside, so that the route frequently used by the local users is extracted among the routes to the destination.

Furthermore, Patent literature 5 discloses a map data distribution apparatus configured to create map data by updating blocks including a searched car route. A technical feature of the apparatus is to distribute, to a navigation apparatus, updated map data on the block which should be updated, among blocks including the route having the start point and the end point of the car.
In US 2006/136173 A1, an athletic performance monitoring systems is disclosed in which an athletic performance monitoring system, comprising a global positioning satellite receiver that obtains data relating to a series of time-stamped position points, a first athletic performance monitor that measures physical data relating to an athlete's performance and means for generating calibration data for the first athletic performance monitor based on data obtained via the global positioning satellite receiver.
US 2009/063049 A1 discloses a bicycle computer having position-determining functionality. In an implementation, an apparatus includes a housing configured to attach to a bicycle. The apparatus has one or more modules to store training metrics of a user of the bicycle as a function of geographic position.

### List of Citations

### Patent Literature

- PTL1:: Japanese Patent Application Laid-Open Publication JP-A-HE15-118 866
- PTL2:: Japanese Patent Application Laid-Open Publication JP-A-HEI9-287 969
- PTL3:: Japanese Patent Application Laid-Open Publication JP-A-2000-286 474
- PTL4:: Japanese Patent Application Laid-Open Publication JP-A-2008-152467
- PTL5:: Japanese Patent Application Laid-Open Publication JP-A-2008-232 629

### Summary of the Invention

### Technical Problem

However, the above-described technologies disclosed in Patent Literatures 1 to 5 intend to search travel routes for cars but not for bicycles, and therefore cannot always provide travel route search which successfully satisfies the demands from cyclists. It is because a route is not always perfect for a cyclist, which allows the cyclist to move from the departure place to the destination by the most direct way or in the shortest period of time.

For example, many cyclists may want to avoid from running on busy roads because such roads pose danger to cyclists. In addition, there may be a need to search for travel routes unique to cyclists. For example, a cyclist wants to search for a travel route including a route for running on a slow ascent for training to the destination and a different route to return to the departure point while the cyclist enjoys the view.

The present invention was accomplished in view of the above-described circumferences. It is therefore an object of the present invention to provide an information processing apparatus, an information processing method, an information processing system that can solve the above-described problems.
The present invention provides an information processing apparatus according to independent claim 1, an information processing method according to independent claim 12, an information processing system according to claim independent claim 13, and a computer-readable program according to claim 17. Further embodiments of the invention are realized according to the corresponding dependent claims.

### Solution to the Problem

To solve the above-described problems, the information processing apparatus according to the present invention comprises the features of claim 1.

To solve the above-described problems, the information processing method according to the present invention comprises the steps of claim 12.

To solve the above-described problems, the information processing system according to the present invention comprises the features of claim 13.

To solve the above-described problems, the computer-readable program according to the present invention allows a computer to perform the processes of claim 17.

### Brief Description of Drawings

- FIG. 1: is an external view showing a bicycle 1, which is a general road bike and provided with an information processing apparatus 2 according to Embodiment 1 of the present invention;
- FIG. 2: is a block diagram showing the electrical configuration of the information processing apparatus 2 according to Embodiment 1 of the present invention;
- FIG. 3: is a block diagram showing the configuration of the information processing apparatus 2 according to Embodiment 1 of the present invention;
- FIG. 4: is a flowchart explaining steps of creating a bicycle map using the information processing apparatus 2 according to Embodiment 1 of the present invention;
- FIG. 5: is a flowchart explaining details of a step of generating travel route information (Step S6) in the information processing apparatus 2 according to Embodiment 1 of the present invention;
- FIG. 6: explains an example of section-dividing processing (Step S61) for dividing a travel route for one section into three sections when travel route information is created;
- FIG. 7: explains details of an area determination processing (Step S62) of creating travel route information;
- FIG. 8: explains details of merging processing, corresponding to branch/ junction patterns of pieces of travel route information in the merging processing in Step S64;
- FIG. 9: is a flowchart explaining details of processing for merging travel route information (Step S7) in the information processing apparatus 2 according to Embodiment 1 of the present invention;
- FIG. 10: is a flowchart explaining details of processing for display and output (Step S8) in the information processing apparatus 2 according to Embodiment 1 of the present invention; and
- FIG. 11: is a schematic view showing the configuration of an information processing system according to Embodiment 2 of the present invention.

### Description of Embodiments

### Embodiment 1

Now, an information processing apparatus and an information processing method using the information processing apparatus will be described in detail with reference to the drawings. The information processing apparatus is mounted on a bicycle and creates a bicycle-dedicated travel map by acquiring: information regarding the operator of the bicycle (cyclist) (for example, profile information including physical features such as height and weight, athletic capability, the results of the bicycle races that the cyclist obtained in the past; and the types of bicycles used by the cyclist); information regarding the running conditions of the bicycle (for example, the speeds and the positions of the bicycle); the other information regarding the bicycle; environmental information when the bicycle is running (for example, the slope of the road, the temperature and the humidity when the bicycle is running); and so forth.

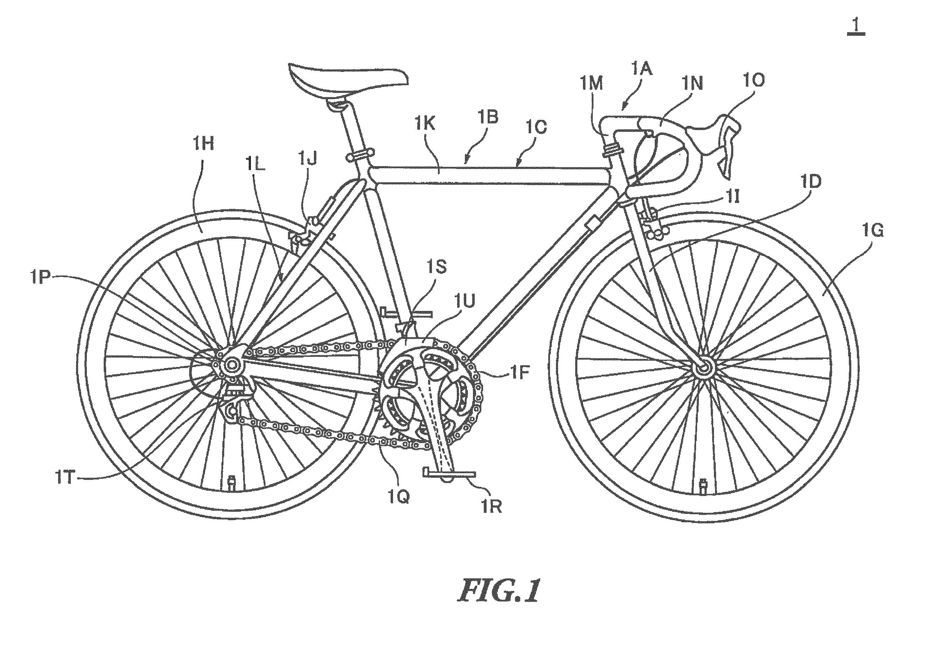

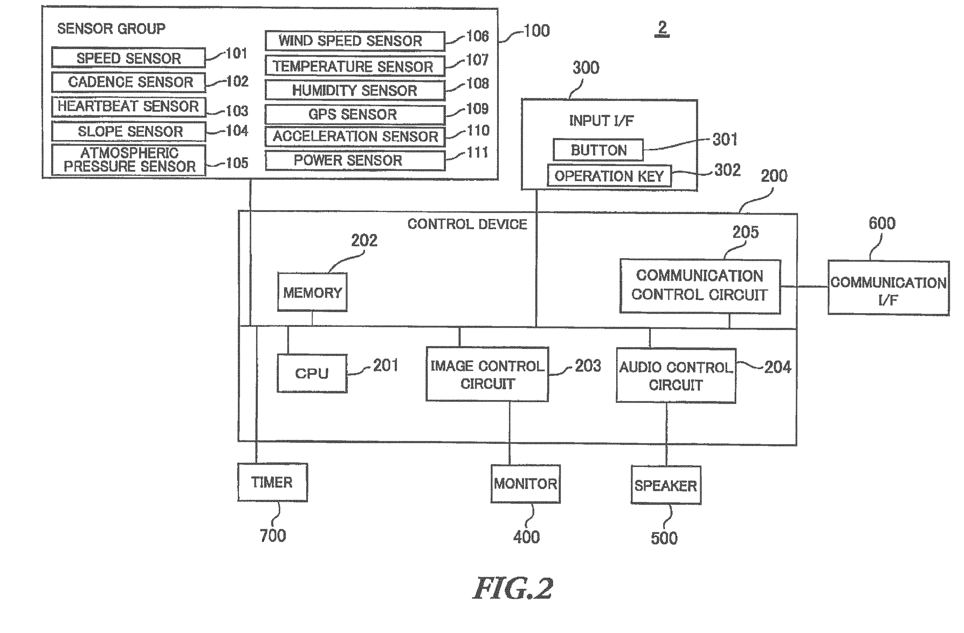

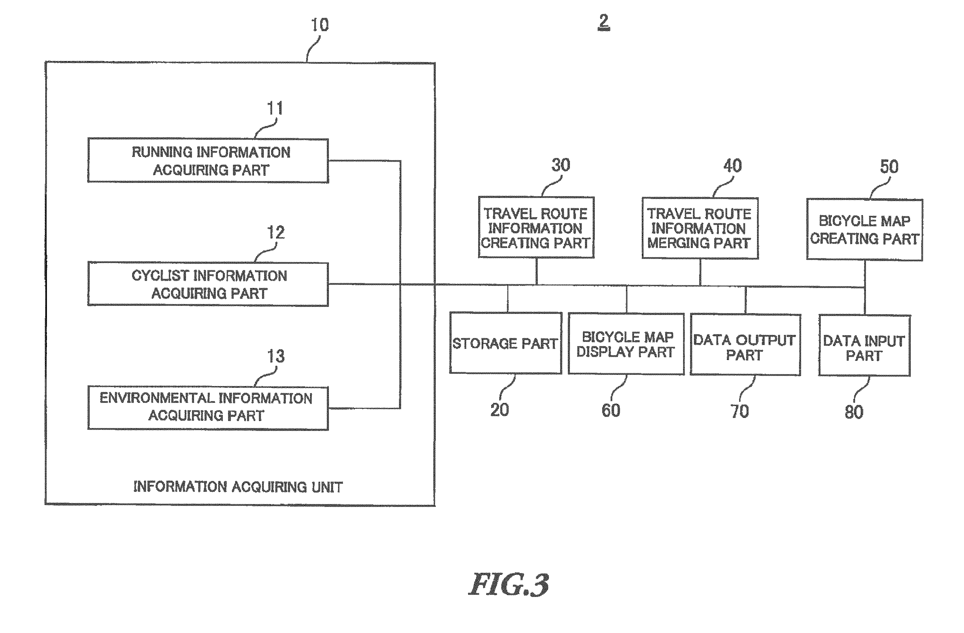

FIG. 1 is an external view showing a bicycle 1, which is a general road bike and fit with the information processing apparatus 2 (see FIG. 2 and FIG. 3) according to Embodiment 1 of the present invention. With the present embodiment, for example, the information processing apparatus 2 shown in FIG. 2 and FIG. 3 is mounted in the bicycle 1 (road bike) as shown in FIG. 1 to perform information processing such as measuring and computing various data. Here, the bicycle 1 provided with the information processing apparatus 2 according to the present embodiment is not limited to a road bike shown in FIG. 1, but any types of bicycles such as a hybrid bicycle (cross bike) and a mountain bike are possible.

As shown in FIG. 1, the bicycle 1 (road bike) has a drop handle part 1A and a frame 1B which forms the skeleton of the body. The frame 1B has a frame body 1C and a front fork 1D. The front fork 1D is supported on the front part of the frame body 1C to be able to rotate about the oblique vertical axis and has a bifurcated lower apart.

In addition, the bicycle 1 includes: the handle part 1 A coupled with the front fork 1D; a drive part 1F which is mounted on the lower part of the frame body 1C to transform pedaling force to driving force; a front wheel 1G supported on the bottom end of the front fork 1D to be able to rotate; a rear wheel 1H supported on the rear of the frame body 1C to be able to rotate; and front and back brakes 1I and 1J. Here, the frame body 1C has a diamond shape including a front triangle portion 1K and a back triangle portion 1L behind the front triangle 1K, which serves as a chain stay.

A handle stem 1M constituting the handle part 1A is fixed to the upper part of the front fork 1D to be able to move upward and downward. A handle bar 1N is fixed on the upper end of the handle stem 1M. This handle bar 1N extends left and right and bends at both ends. A brake lever 10 with a gear shifting function is mounted on each end of the handle bar 1N.

The drive part 1F includes a small gear part 1P fixed to a free hub of the rear wheel 1H not to be able to rotate; a chain 1Q bridged from the small gear part 1P to the direction of the front wheel 1G; a pedal 1R to transmit driving force to the chain 1Q; and a front derailleur 1S and a rear derailleur 1T for shifting gears. The front derailleur 1S has a chain guide 1U which allows the chain 1 Q to pass through.

### Configuration of Information processing apparatus

FIG. 2 is a block diagram showing the electrical configuration of the information processing apparatus 2 according to Embodiment 1 of the present invention. As shown in FIG. 2, the information processing apparatus 2 according to the present embodiment includes: a sensor group 100 that measures various data; a control device 200 that stores, computes and outputs the measured various data; an input interface (I/F) 300 that allows a cyclist and so forth to perform various operations such as data input, on the information processing apparatus 2; a monitor 400 with a screen to display the measured and computed data; a speaker 500 that outputs various acoustic data from the information processing apparatus 2; a communication interface (I/F) 600 including an antenna and a USB port, which outputs the measured and computed data to an external device (not shown) and inputs various data from the external device; and a timer 700 that measures the current time and the elapsed time for data measurement and so forth.

As shown in FIG. 2, the sensor group 100 in the information processing apparatus 2 according to the present embodiment includes a speed sensor 101, a cadence sensor 102, a heartbeat sensor 103, a slope sensor 104, an atmospheric pressure sensor 105, a wind speed sensor 106, a temperature sensor 107, a humidity sensor 108, a GPS sensor 109, an acceleration sensor 110 and a power sensor 111.

Here, the configuration of the sensor group 100 shown in FIG. 2 is merely one example, and the sensor group 100 may be built in the information processing apparatus 2, or mounted outside the information processing apparatus 2 to acquire various information by cable or radio. With the present embodiment, these sensors may be classified into a sensor built in the information processing apparatus 2, a sensor directly mounted on the bicycle 1, a sensor which the cyclist and so forth wear.

The speed sensor 101 is a device to measure the traveling speed of the bicycle 1. The speed sensor 101 calculates the speed of the bicycle 1 per unit time by use of, for example, a magnet fixed to a spoke and so forth in a wheel of the bicycle 1 and a magnet detector mounted on the chain stay 1L and so forth to calculate the moving distance of the bicycle 1 every period of time the magnet passes the magnet detector based on the circumferential length of the wheel.

The cadence sensor 102 is a device to measure the number of rotations of the pedal 1R of the bicycle 1 per unit time. The cadence sensor 102 measures the number of rotations of the pedal 1R per unit time by use of, for example, a magnet mounted on the pedal 1R and a magnet detector mounted on the chain stay 1L and so forth. That is, recreational cyclists are greatly interested in the running of a professional cyclist using the bicycle 1, represented by the cadence (the number of rotations of the crank per minute).

For example, it is valuable for recreational cyclists to know how fast and slow a professional cyclist rotates the pedal 1R of the bicycle 1 when he pedals. Therefore, with the information processing apparatus 2 according to the present embodiment, it is possible to easily check on a map, the cadences of other cyclists, including a professional cyclist, for running on the same route.

The heartbeat sensor 103 is a device to measure the heart rate of the cyclist of the bicycle 1. For example, the heartbeat sensor 103 measures the heart rate per unit time by being fixed to the chest of the cyclist and measuring electrocardiogram with electrodes.

The slope sensor 104 is a device to calculate the average slope of the travel route when the bicycle 1 runs in a given period of time. Here, the slope sensor 104 does not always need to be used. For example, the average slope may be calculated based on a distance and an altitude difference (a vertical drop), by calculating the moving distance for a given period of time using the GPS sensor 109 and so forth, and calculating the altitude difference for the given period of time required for the movement, based on the altitude information calculated by the atmospheric pressure 105. In addition, the slope sensor 104 may be built in the information processing apparatus 2, or directly mounted on the bicycle 1.

The atmospheric pressure sensor 105 is a device to measure the atmospheric pressure around the bicycle 1. With the present embodiment, the atmospheric pressure sensor 104 or the control device 200 calculates the altitude of the bicycle 1 based on the atmospheric pressure measured by the atmospheric pressure sensor 104.

Here, the atmospheric pressure sensor 105 may be built in the information processing apparatus 2, or directly mounted on the bicycle 1. In addition, instead of the atmospheric pressure sensor 105, the GPS sensor 110 may be used to acquire data on the altitude, or three-dimensional map information including altitude information may be used as map information.

The wind speed sensor 106 is a device to measure the speed of the bicycle 1 relative to the air around the bicycle 1. The wind speed sensor 106 calculates the wind speed by measuring the speed at which the air moves relative to the bicycle 1 using an air flow sensor, a propeller or a microphone. The wind speed sensor 106 may be built in the information processing apparatus 2, or directly mounted on the bicycle 1.

The temperature sensor 107 is a device to measure the temperature around the bicycle 1 (for example, the temperature at which the bicycle 1 stops and the temperature at which the bicycle 1 is running). The temperature sensor 107 may be built in the information processing apparatus 2, or directly mounted on the bicycle 1.

The humidity sensor 108 is a device to measure the humidity around the bicycle 1 (for example, the humidity at which the bicycle 1 stops and the humidity at which the bicycle 1 is running). The humidity sensor 108 may be built in the information processing apparatus 2, or directly mounted on the bicycle 1.

The GPS sensor 109 is a positioning system to measure positional information on the bicycle 1. The GPS sensor 109 may also acquire information about the current time and the traveling direction of the bicycle 1 as well as the positional information via a GPS antenna (not shown). The GPS sensor 109 may be built in the information processing apparatus 2, or directly mounted on the bicycle 1.

The acceleration sensor 110 is a device to measure a change in three-dimensional position due to a change in acceleration of the bicycle 1. Based on information about the measured acceleration, it is possible to determine the road surface condition and curve characteristics. For example, when the acceleration fluctuates in the vertical direction for a certain period of time, it can be determined that the road surface condition is poor, and, when the acceleration is a certain value or higher, it can be determined that the route includes a dirt road.

In addition, when the acceleration instantaneously and significantly fluctuates in the vertical direction, it can be determine that it is hard to run on the road by the bicycle 1 or there is a risk of fall on the road because the road surface is quite bumpy or there is the cover of a drainage conduit and so forth. In this way, by using the acceleration sensor 110, it is possible to add road surface conditions and dangerous spots to a bicycle map displayed on the monitor 400.

Moreover, by using the acceleration sensor 110, alarm or guidance may be displayed on the monitor 400, or sound may be output from the speaker 500 in running, depending on road surface conditions. The acceleration sensor 110 may be built in the information processing apparatus 2, or directly mounted on the bicycle 1.

The power sensor 111 is a device which is built in the crank or the rear wheel hub of the bicycle I to detect output of the bicycle 1. A typical power sensor 111 is a power meter. A general power meter can measure the force applied to a sprocket and display the measurement result on a cycle computer (not shown) or the monitor 400. Such a sensor has drawn attention of many cyclists including professional, semiprofessional and recreational cyclists.

By using the power sensor 111, the information processing apparatus 2 according to the present embodiment can visually display on a map a travel route with a slope which necessarily applies load to the cyclist.

Besides this, the information processing apparatus 2 can visually display a route even constituting flat roads, which applies load to the legs of the cyclist running as fast as he can (for example, a route which includes the road frequently used for training and applies great load to the legs of many cyclists).

As described above, the sensor group 100 in the information processing apparatus 2 according to the present embodiment is configured to be able to measure various data using various sensors. Here, in order to acquire and calculate the above-described various data, it does not necessarily need to use the data acquired by each single sensor. For example, data obtained by combining the data acquired by a plurality of sensors and calculating from that data, or the data acquired by a sensor in another information processing apparatus 2 may be used by inputting the data from the communication I/F 600 and so forth.

Various data measured by the sensor group 100 is stored in the information processing apparatus 2, and then subjected to various processing such as computation and output. As shown in FIG. 2, the control device 200 includes a CPU 201, a memory 202, an image control circuit 203, an audio control circuit 204 and a communication control circuit 205, which are connected with each other via a bus 206. Here, as shown in FIG. 2, the sensor group 100, the input I/F 300, the monitor 400, the speaker 500, the communication I/F 600 and the timer 700 are connected to the bus 206.

The memory 202 may be an internal storage device such as a flash memory, a RAM, a ROM and a hard disk drive, or an external nonvolatile memory such as a USB memory and a flash memory card. In the information processing apparatus 2 according to the present embodiment, the memory 202 temporarily or permanently stores the data and so forth acquired by the sensor group 100 and computed by the CPU 201.

Also in the information processing apparatus 2, additional information such as map information is stored in the memory 202. The stored additional information is associated with the acquired and computed data to create a bicycle map. Then, the monitor 400 may display the created bicycle map.

The image control circuit 203 controls the monitor 400 including such as a liquid crystal screen according to a command from the CPU 201 to display an image corresponding to the command on the screen. The audio control circuit 204 generates an audio signal according to a command from the CPU 201 and allows the speaker 500 to output the voice signal.

The communication control circuit 205 can output (transmit) various data stored in the memory 202 to the external device via the communication I/F 600, according to a command from the CPU 201. In addition, the communication control circuit 205 may receive data from the external device via the communication I/F 600 and store the data in the memory 202. Here, the communication I/F 600 may be realized by various antennas to connect a network such as Internet for radio communication, or may be realized by a communication interface to connect to a LAN cable and so forth for cable communication.

In addition, the input I/F 300 is connected to the control device 200 via the bus 206. The input I/F 300 has a button 301 used by a cyclist and so forth to instruct to start/end data measurement and so forth, and an operation keys 302 equivalent to keys on a keyboard, a cellular phone and so forth, which allow the cyclist to input characters.

In addition to the button 301 and the operation keys 302, the input I/F 300 also has a pointing device for various operations, such as a track ball and a joy stick. Otherwise, the input I/F 300 may be formed by a touch panel and share a screen with the monitor 400, instead of the button 301 and the operation keys 302, or together with them.

FIG. 3 is a block diagram showing the configuration of the information processing apparatus 2 according to one embodiment of the present invention. As shown in FIG. 3, the information processing apparatus 2 includes: an information acquiring unit 10 having a running information acquiring part 11, cyclist information acquiring part 12 and an environmental information acquiring part 13; a storage part 20; a travel route information creating part 30; travel route information merging part 40; bicycle map creating part 50; a bicycle map display part 60; a data output part 70; and data input part 80.

The running information acquiring part 11 functions as means for acquiring running information including the positional information on the bicycle 1, using the control device 200 for data processing, including analyzing data such as the data measured by the sensor group 100 constituting the speed sensor 101, the cadence sensor 102, the wind speed sensor 106, the GPS sensor 109 and the acceleration sensor 110, and the data input by operating the input I/F 300.

In addition, the cyclist information acquiring part 12 functions as means for acquiring information on the cyclist of the bicycle 1 (physical information and profile information on the cyclist described later), using the control device 200 for processing data such as the data measured by the heartbeat sensor 103 in the sensor group 100, and the data input by operating the input I/F 300.

The environmental information acquiring part 13 functions as means for acquiring information on the external environment of the bicycle 1 while running, by using the control device 200 for processing data such as the data measured by the slope sensor 104, the atmospheric pressure sensor 105, the temperature sensor 107 and the humidity sensor 108 constituting the sensor group 100, and the data input by operating the input I/F 300.

The storage part 20 can temporarily or permanently store various data acquired by the running information acquiring part 11, the cyclist information acquiring part 12 and the environmental information acquiring part 13. The storage part 20 can also store the intermediate data on the computation by the travel route information creating part 30 and the travel route information merging part 40, the created travel route information, map information associated with the travel route information, and various information input by the cyclist through the data input part 80. Here, the function of the storage part 20 is realized by the memory 202 and so forth shown in FIG. 2.

The travel route information creating part 30 is a unit realized by the control apparatus 200 and so forth, and has a function to create travel route information on the bicycle 1 by performing arithmetic processing on various data acquired by the sensor group 100. That is, the travel route information creating part 30 creates travel route information by associating the information regarding the bicycle 1 acquired by the information acquiring unit 10, including the running information, the cyclist information and the environmental information while the bicycle 1 is running, with the travel route information including the positional information on the bicycle 1 measured by the GPS sensor 109 at regular time intervals.

The travel route information merging part 40 is a unit realized by the control device 200 and so forth, and merges one or more pieces of travel route information created by the travel route information creating part 30 with another travel route information acquired from another information processing apparatus and so forth to make integrated travel route information.

The bicycle map generating part 50 is a unit realized by the control device 200 and so forth, and creates a bicycle map by associating the travel route information generated by the travel route information creating part 30 or the travel route information merging part 40 with map information stored in the storage part 20.

The bicycle map display part 60 has a function to display, on the monitor 400, various information including a bicycle map created using the control device 200 to process the various data acquired by the group sensor 100, and a function to output various audio data such as operation information, operation sound, beep sound and so forth from the speaker 500.

In this case, the input I/F 300 may switch displaying pieces of information such as various information acquired by the running information acquiring part 11, the cyclist information acquiring part 12 and the environmental information acquiring part 13; travel route information acquired by the travel route information creating part 30 and the travel route information merging part 40; a bicycle map created by the bicycle map creating part 50; cyclist information used to create the map; map information; and setting information on the information processing apparatus 2.

The data output part 70 allows data communication between an external device (not shown) and the information processing apparatus 2 to transmit and receive various data. An example of the data output part 70 is shown in FIG. 2 where the function of the data output part 70 is realized by the control device 200, the communication I/F 600 and so forth.

For example, the information processing apparatus 2 may perform data communication with an external device by using an antenna, or by cable. Otherwise, the information processing apparatus 2 may perform data communication with an external device using removable and portable storage media such as a USB memory.

The data input part 80 has a function to allow the cyclist and so forth to input operating information to, for example, start and stop various data measurement and switch display of output information on the monitor, via the input I/F 300 such as the button 301 and the operation keys 302. The data input part 80 also has a function to input additional information, including cyclist's information on the physical feature and the results of the past races and predetermined setting information on the information processing apparatus 2, via the above-described input I/F 300.

### Creation of Bicycle Map by Information Processing Apparatus

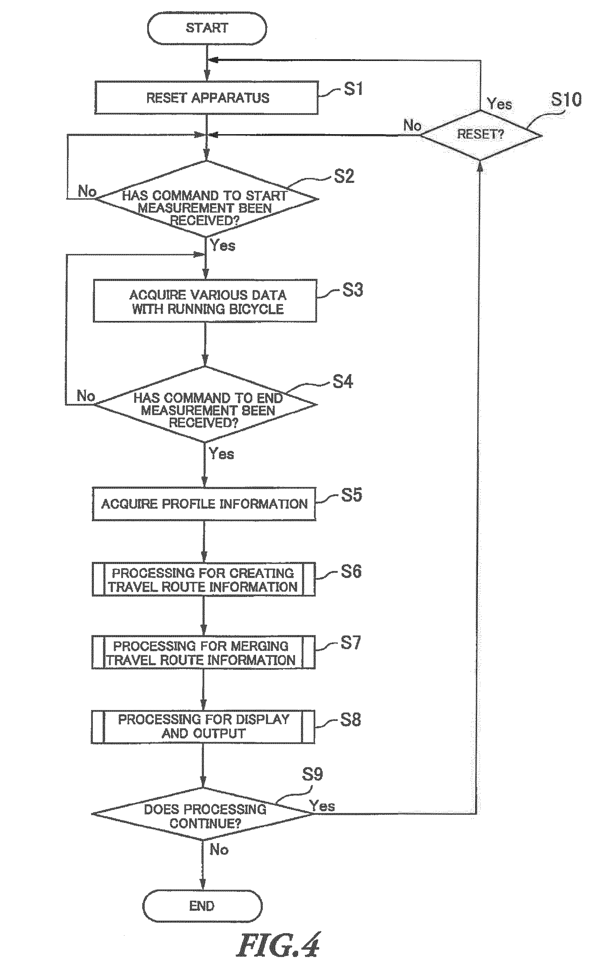

Next, steps of creating a bicycle map using the above-described information processing apparatus 2 will be explained in detail with reference to the drawings. FIG. 4 is a flowchart explaining steps of creating a bicycle map using the information processing apparatus 2 according to Embodiment 1 of the present invention. Here, in the following descriptions, the information processing apparatus 2 shown in FIG. 2 and FIG. 3 is mounted on the bicycle 1 as shown in FIG. 1, and the cyclist operates the information processing apparatus 2 by him/herself to measure various data while running the bicycle 1, and therefore create a bicycle map.

First, the cyclist operates the input I/F 300 in the information processing apparatus 2 to initialize (reset) the information processing apparatus 2 to prepare to create a new bicycle map (Step S1). This reset of the information processing apparatus 2 changes the initial value of part of information temporarily accumulated in the storage part 20 to zero or a predetermined value, which is accumulated from the start to the end of measurement to create travel route information.

After resetting the storage part 20 in Step S1, the information processing apparatus 2 determines whether or not there is a command (for example, by pushing the button 301) to start data measurement via the operation of the input I/F 300. As a result, determining that there is a command to start data measurement (Yes), the information processing apparatus 2 performs processing in Step S3.

On the other hand, when there is no command to start data measurement, the information processing apparatus 2 waits for a command to start data measurement. Here, data measurement may automatically start by reset processing (Step S1) or automatically start at the time the bicycle 1 starts moving.

In addition, when there is no command to start data measurement from the cyclist and so forth over a predetermined period of time (e.g., 60 seconds or longer) after the reset processing in the information processing apparatus 2, the information processing apparatus 2 may change the mode to a power-saving mode such as a sleep mode.

In Step S3, the running information acquiring part 11 and the environmental information acquiring part 13 which are realized by the sensor group 100 and so forth acquire information created with running of the bicycle 1 (running information) and information about the external environment when the bicycle 1 is running (environmental information) (Step S3).

With the present embodiment, the running information acquiring part 11 acquires, for example, the following information at regular time intervals (e.g., per one second) and stores the information in the storage part 20.
- The moving speed of the bicycle 1 per unit time, which is measured by the speed sensor 101.
- The number of rotations of a pedal of the bicycle 1 per unit of time, which is measured by the cadence sensor 102.
- The wind speed (the wind speed relative to the bicycle 1), which is measured by the wind speed sensor 106.
- The position of the bicycle 1 measured by the GPS sensor 109.
- The instantaneous acceleration measured by the acceleration sensor 110.
- The output of the bicycle 1 measured by the power senor 111.

In addition, with the present embodiment, the cyclist information acquiring part 12 acquires the following information at regular time intervals (e.g., per second) and stores the information in the storage part 20.
- The heart rate of the cyclist of the bicycle 1 per unit of time, which is measured by the heartbeat sensor 103.

Moreover, with the present embodiment, the environmental information acquiring part 13 acquires the following information at regular time intervals (e.g., per second) and stores the information in the storage part 20.
- The slope of the location of the bicycle 1 measured by the slope sensor 104.
- The altitude of the location of the bicycle 1 measured by the atmospheric pressure sensor 105.
- The temperature of the location of the bicycle 1 measured by the temperature sensor 107.
- The humidity of the location of the bicycle 1 measured by the humidity sensor 108.

Next, the information processing apparatus 2 determines whether or not there is a command (for example, by pushing the button 301) to end the data measurement by the operation of the input I/F 300 (Step S4). As a result, when receiving a command to end the data measurement (Yes), the data processing apparatus 2 performs processing in Step S5. On the other hand, when not receiving a command to end the data measurement, the information processing apparatus 2 continues running information acquiring processing (Step S3).

Here, with the present embodiment, the input I/F 300 has one button (button 301) which serves as the start button and the stop button. However, the input I/F 300 may have a plurality of buttons and uses respective buttons as the start button and the stop button.

Next, in Step S5, the cyclist of the bicycle 1 operates the input I/F 300 to input profile information on the cyclist by him/herself, so that the information processing apparatus 2 acquires the profile information. Here, the profile information includes various information, such as personal physical information including age, gender, height and weight, and athletic capability; ranking information including professional cyclists, recreational cyclists and beginners; record information on the past races in which the cyclist participated (for example, the records in a famous race); the name of the team to which the cyclist belongs; information about the bicycle on which the cyclist rides; years of experience; the annual mileage; days of the week, seasons and the time zone for cycling.

The athletic capability includes the cardiopulmonary function, the staying power, and the muscle strength of the cyclist. Here, with the present embodiment, the profile information is acquired after the information generated with running of the bicycle 1 has been acquired in Step S3. However, the profile information may be acquired before the bicycle starts running, or the data having been input from a different apparatus on another date and time may be input to the information processing apparatus 2.

Next, the travel route information creating part 30 analyzes the running information acquired in Step S3 (for example, the hourly positional information on the bicycle 1 acquired by the GPS sensor) to generate travel route information on the bicycle 1 (Step S6). That is, the travel route information creating part 30 can acquire, at regular time intervals, latitude and longitude information on the position to which the bicycle 1 moves over a certain period of time, based on the information acquired by the GPS sensor 109, and analyzes this latitude and longitude information.

Here, with the present embodiment, the travel route information is created in association with the profile information on the cyclist acquired in Step S5 and the cyclist information and the environmental information acquired as well as the running information in Step S3. Then, the travel route information creating part 30 stores created travel route information in the storage part 20.

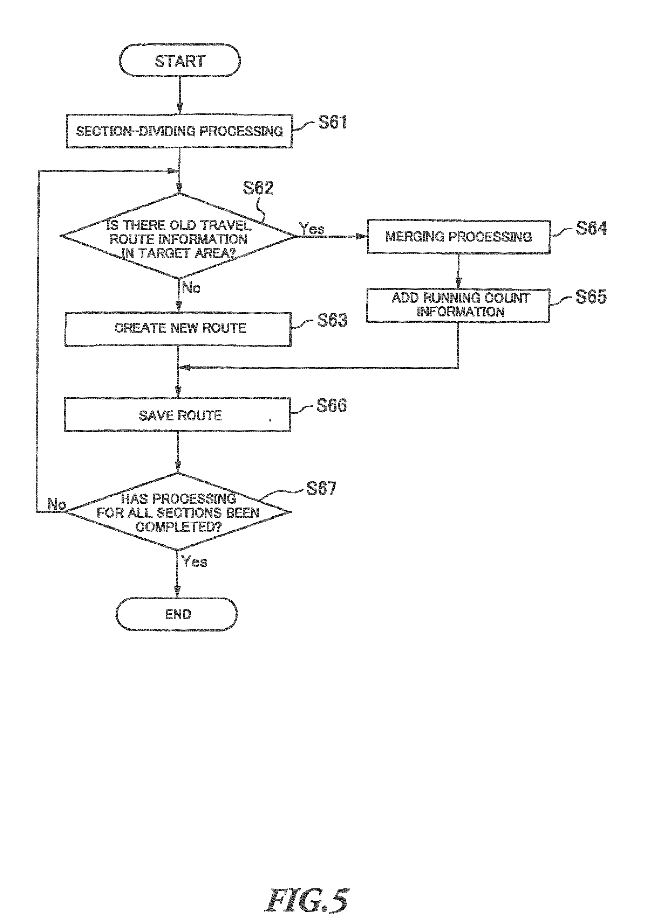

Now, details of processing for creating travel route information shown in Step S6 will be described. FIG. 5 is a flowchart explaining details of processing for creating travel route information (Step S6) in the information processing apparatus 2 according to Embodiment 1 of the present invention.

The travel route information creating part 30, first, reads GPS information for a certain section measured in Step S3, from the storage part 20, and performs processing for subdividing the GPS information into sections (Step S61). Now, details of processing for dividing into sections will be described.

The GPS information for a certain section which the travel route information creating part 30 reads from the storage part 20 may has a length of several meters or a wide length of several hundred kilometers. Therefore, in order to create more accurate travel route information, it is necessary to divide the travel route into each certain level of small area.

With the present embodiment, for example, a travel route is divided according to the latitude and longitude information. For example, when a travel route passes the point of the latitude of 35 degrees and 40 minutes, and the longitude of 139 degrees and 46 minutes, an area tag (35, 139) is created, and the travel route with the area tag (35, 139) is defined as one section.

In this way, even if a travel route spans all over the world, it is possible to define a section with an appropriate size by dividing the travel route into sections with latitude and longitude tags as described above. By this means, it is possible to create travel route information for each of a plurality of divided sections even if a travel route is long, and therefore significantly reduce the load on the information processing apparatus 2 for one processing.

Here, as boundaries used for dividing a travel route into sections, administrative boundaries such as countries, states, prefectures, and municipalities, may be adopted in addition to latitudes and longitudes. Moreover, by dividing latitudes and longitudes to decimal places, more finely-divided sections may be obtained.

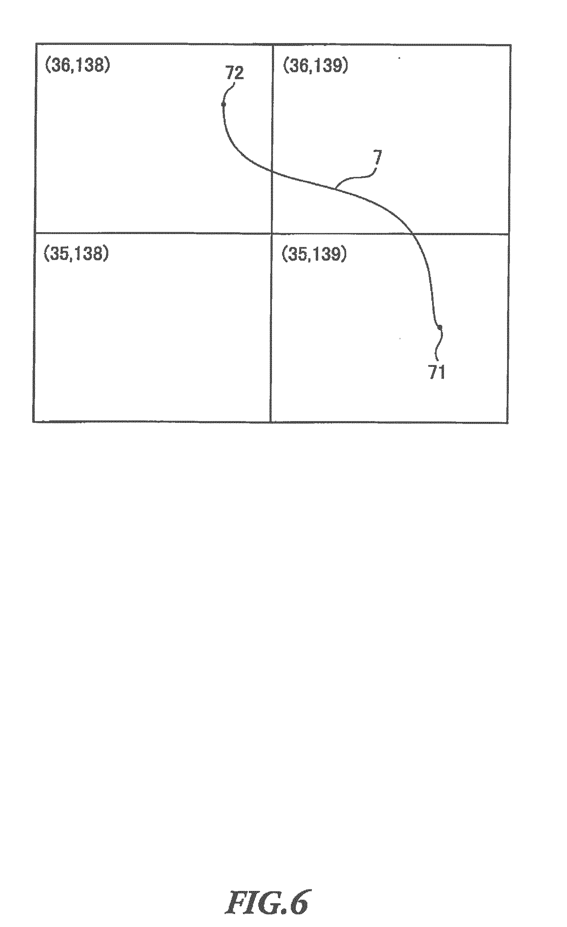

FIG. 6 explains an example of dividing a travel route into sections to create travel route information, where one travel route is divided into three sections by section-dividing processing (Step S61). In the case shown in FIG. 6 as an example, a travel route 7 for the bicycle 1 begins with a start point 71 with the area tag (35, 139), runs through an area tag (36, 139) and ends at a stop point 72 with an area tag (36, 138).

That is, the travel route 7 spans an area including three sections (36, 138), (36, 139) and (35, 139) divided by the latitude and longitude. Therefore, to create travel route information, the area indicated by the area tag (35, 138) is not targeted for processing, but the area including the three sections which are indicated by the area tag (36, 138), (36, 139) and (35, 139), respectively, are targeted for processing .

Next, the following steps are performed for each section divided by the section-dividing processing in Step S61. With the present embodiment, the following steps are performed on sections in the order from the section indicated by the area tag (36, 138).

That is, after the section-dividing processing in Step S61, the information processing apparatus 2 determines whether or not there has been another travel route information in the area indicated by the area tag (36, 138), based on whether or not the travel route information on this area has always been stored in the storage part 20 (Step S62).

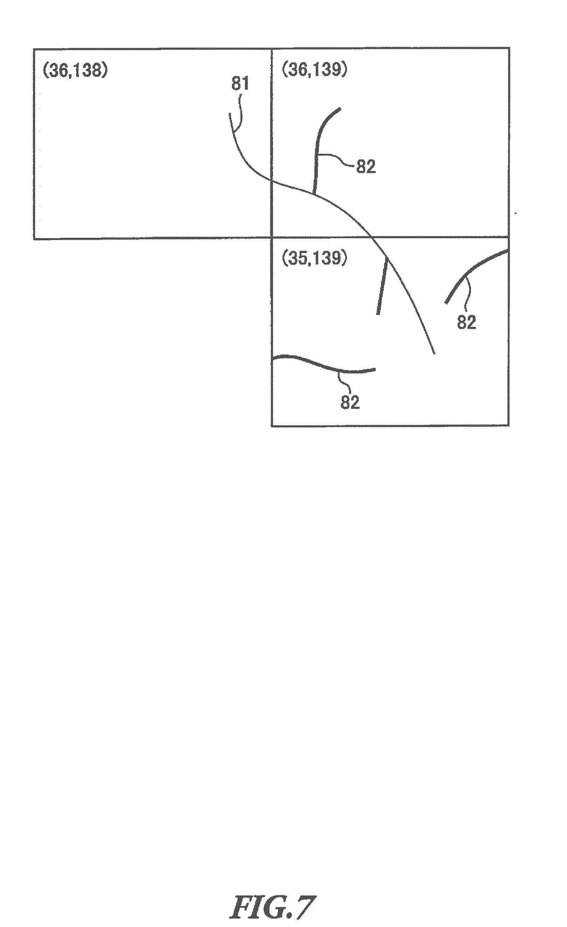

FIG. 7 explains details of area determination processing (Step S62) for creating travel route information. Here, if the information processing apparatus 2 has ever created travel route information, at least one or more pieces of travel route information created in the past have been stored in the storage part 20. That is, as shown in FIG. 7, routes stored in the storage part 20 includes a new additional travel route 81 divided by the section-dividing processing in Step S61 and a travel route 82 which has already been created and accumulated in the storage part 20.

Here, as described above, in the case shown in FIG. 7 as an example, the area with the area tag (36, 138), the area with the area tag (36, 139) and the area with the area tag (35, 139) are targeted for area determination processing. Referring to FIG. 7, there is no route 82 having been accumulated in the area with the area tag (36, 138), but there are one or more travel route 82 having been accumulated in the area with the area tag (36, 139) and the area with the area tag (35, 139).

Therefore, in the area determination processing in Step S62, it is determined that there is no different travel route in the area with the area tag (36, 138) (No), and then the step moves to Step S63. Meanwhile, it is determined that there are different travel routes in the area with the area tag (36, 139) and the area with the area tag (35, 139), and then the step moves to Step S64.

Step S63 is executed when the result of the area determination in Step S62 is negative "No", and therefore new travel route information is created. That is, in this case, since any different route from the route in the same area is not stored in the storage part 20, new travel route information is created by associating the travel route 81 with running count information (the count (the number of times) is 1 because the travel route 81 is newly created this time).

Meanwhile, in Step S64, merging processing is performed when it is determined that the result of the area determination is positive "Yes" in Step S62. That is, in Step S64, first, the travel route 82 accumulated in the storage part 20 in advance is read, and then compared with the new additional travel route 81 with respect to latitude and longitude positional information to determine whether the travel route 82 and the travel route 81 are the same or not, whether or not they branch/join on the way, and so forth.

To be more specific, for example, all the sampling points are compared between the travel routes, and, when there are a plurality of sampling points having latitude and longitude positional information closer to one another than a predetermined threshold, it is determined whether or not the travel routes are the same based on the number of sampling points closer to one another. In this case, if there is a branch or a junction on the way, the branch or the junction is considered a new divided point, and therefore, the travel route is more finely divided into sections.

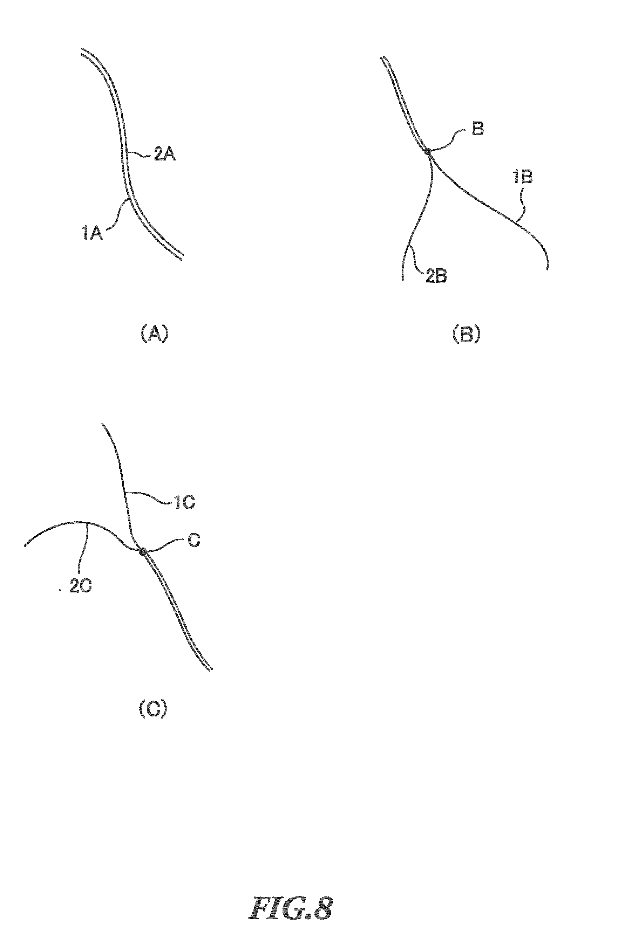

FIG. 8 explains details of merging processing, corresponding to branch/ junction patterns of pieces of travel route information in the merging processing in Step S64. As shown in FIG. 8, there are three branch/junction patterns in the merging processing:
(A) a route 1A and a route 2A are completely the same;
(B) a route 1B and a route 2B are partly the same and join at a dividing point B; and
(C) a route 1C and a route 2C are partly the same and branch at a dividing point C. In this way, with the present embodiment, when a route can be divided by nodes with a branch, a junction and so forth, the route is divided into a plurality of sections at dividing points.

Here, with the present embodiment, taking into consideration of a difference in the traveling direction, it is determined to create different travel routes to create travel route information. This is why, differently from driving a car, the load on the cyclist is greatly influenced by whether the travel route ascends or descends.

For example, the heart rate of the cyclist is higher and the speed of the bicycle is lower in a case in which the travel route ascends than in a case in which the travel route descends. Head wind more greatly affects the load on the cyclist. Therefore, if data on an ascending travel route and data on a descending travel route are simply merged into one, the average value between them is obtained.

As a result of this, a difference between them, which is characteristic information on the travel routes with the slope could be cancelled. Therefore, with the present embodiment, the running information acquiring part 11 realized by the GPS sensor 109 and so forth acquires information on the traveling direction of the bicycle 1, and creates travel route information in a format that allows the travel route information to be classified based on the acquired traveling direction information.

Here, with the present embodiment, for even one road, both the travel route in the forward direction and the travel route in the backward direction are determined taking into consideration the traveling directions as described above. However, similar processing without taking into consideration the traveling directions is possible.

Moreover, in the merging processing in the Step S64, in order to create travel route information for each section, bicycle-related information is merged. The bicycle-related information may be, for example, averaged or grouped as described later, for each sampling point or each section, and may include information of the average speed at the corresponding sampling points and the level distribution in the section.
- To be averaged:
   slope, altitude, speed, cadence, heart rate, power, wind speed, etc.
- To be grouped:
   physical information such as age and level, etc.

In addition, the accuracy of information on a three-dimensional change in position of the bicycle 1 obtained by the acceleration sensor 110 is improved because the number of samples is increased by merging and averaging. Then, it is possible to accurately tag travel route information with information about road conditions such as dirt and freeze, and also accurately provide POI (point of interest) information regarding caving points on the road and so forth as travel route information. Here, when the information regarding the bicycle 1 significantly changes in one section, the section may be divided into two or more sections.

After a new route has been created in Step S63, or after the merging processing in Step S64 and adding running count information in Step S65, the resulting information is saved in the storage part 20 (Step S66). Then, it is determined whether or not the above-described processing is performed on all the sections (Step S67). As a result, if the processing on all the divided sections has been completed (Yes), the processing ends. On the other hand, when the processing on all the sections has not been finished yet (No), the step returns to Step S62 and the above-described processing is repeated.

That is, with the present embodiment, for example, the first section divided in the first loop is processed, and subsequent sections are processed in subsequent loops in turn. For example, there are three sections with the area tags (36, 138), (36, 139), and (35, 139) respectively, loop processing is performed three times in turn from the area tag (36, 138).

Next, the travel route information merging part 40 performs processing for merging (integrating) pieces of travel route information which are acquired by the travel route information creating part 30 and stored in the storage part 20 (Step S7). The pieces of travel route information referred here may be acquired from a plurality of cyclists, or acquired from one cyclist more than once. In addition, pieces of travel route information are not limited as long as they are stored in the storage part 20 by the time of merging processing, or may be created by a different information processing apparatus and then input in the information processing apparatus 2.

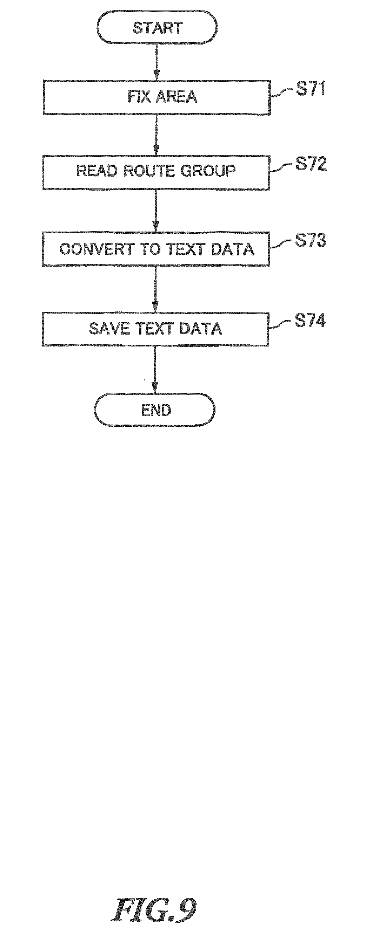

Next, details of processing for merging travel route information (Step S7) will be explained. FIG. 9 is a flowchart explaining details of processing for merging travel route information (Step S7) in the information processing apparatus 2 according to Embodiment 1 of the present invention.

First, the area targeted for processing for merging travel route information is fixed (Step S71). Here, with the present embodiment, the target areas are respective rectangle areas (box areas divided by latitude and longitude lines) including the travel route over which the bicycle 1 runs from when the start button is pushed until the stop button is pushed as described above, and indicated by four area tags (36, 138), (36, 139), (35, 138) and (35, 139), respectively.

Here, method of fixing target areas is not limited to the above-described method, but another method is possible. For example, the positional information at the time of merging processing is acquired from the positional information which can be obtained by the GPS sensor (that is, current position is acquired), and then, one or more neighboring areas including the current position may be fixed as target areas.

In addition, target areas may include a positional coordinate input by the cyclist using the input I/F 300. Otherwise, an area in a map which is obtained by displaying the map on the monitor 400 and scrolling and scaling the map using the input I/F 300, may be fixed as a targeted area.

Next, the information processing apparatus 2 reads all the routes in the target area (travel route information) fixed in Step S71, from the storage part 20 (Step S72). At this time, each travel route information is read, including pieces of latitude and longitude information indicative of a travel route, running count information indicative of the number of times of running on the route, and so forth. In this case, information to be read may include not only information acquired by each sensor, but also information acquired by the information processing apparatus 2 in the past and information merged with the information acquired by another information processing apparatus.

That is, for example, for each sampling point, or section, the averaged slope, altitude, speed, cadence, heart rate, power and wind speed, and the grouped physical information such as age and level are read. In addition to these, other information may be read, for example, road condition information such as a dirty or freezing state, which is obtained by the acceleration sensor 110 and improved in its accuracy by merging processing, and POI (point of interest) information such as information on caving points on the road surface.

Then, the information processing apparatus 2 converts the read travel route information into XML text data (Step S73). Here, also the running count information on each travel route is embedded in one XML tag and converted into XML text data. The information processing apparatus 2 saves the above-described converted text data in the storage part 20 (Step S74).

Here, with the present embodiment, although travel route information is used as text data, the data format is not limited to text as long as information can be added to and changed from, like text data.

The information processing apparatus 2 outputs and displays the travel route information having been subjected to the merging processing on a monitor screen and so forth by use of the bicycle map display part 60. In this case, the bicycle map display part 60 displays the merged travel route information by superimposing the merged travel route information on the map information stored in advance in the storage part 20.

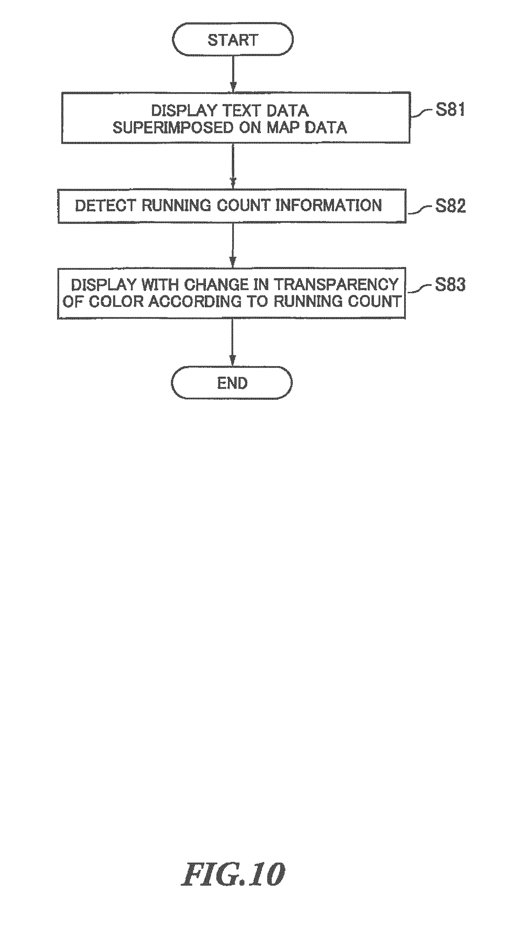

FIG. 10 is a flow chart explaining details of processing for display and output (Step S8) in the information processing apparatus 2 according to Embodiment 1 of the present invention. The information processing apparatus 2 first reads XML text data created by the processing for merging travel route information, from the storage part 20, and displays travel route information by superimposing the travel route information on map data stored in advance in the storage part 20 (Step S81).

Next, the information processing apparatus 2 detects the tag of running count information from the read XML data (Step S82), and displays the travel route information on the screen, with different colors and so forth, depending on the number of times of runs (Step S83).

For example, when travel routes are displayed in red, the transparency may be changed depending on the number of times of runs. In this case, unused travel routes may be displayed in colors, for example, the colors of the displayed map information as they are, or may not be displayed.

For example, the transparency may be changed in stages such that when the number of times of runs is 100 or more, the transparency is 0 %; when the number of times of runs is 50 to 99, the transparency is 50 %; and when the number of times of runs is one, the transparency is 99 %.

By this means, it is possible to display travel routes used for running a greater number of times in an opaque color, and therefore help the user of the information processing apparatus 2 easily and quickly acquire appropriate information.

In addition to changing the display color depending on the number of times of runs, another configuration is possible where the display color is changed depending on the average moving speed of the bicycle 1 acquired by the speed sensor 101. For example, when travel routes are displayed in red, the display color is changed by changing the transparency depending on the average speed.

For example, travel routes are displayed with changing the transparency of a color in stages such that when the average speed is 40 km/h or higher, the transparency is 0 %; when the average speed is 20 km/h to 40 km/h, the transparency is 50 %; and when the average speed is lower than 20 km/h, the transparency is 99 %.

By this means, it is possible to display travel routes available for high-speed running in an opaque color, and therefore help the user of the information processing apparatus 2 easily and quickly acquire appropriate information.

In addition, the display color of travel routes may be changed using the output of the bicycle 1 acquired by the power sensor 111 such that the greater the output of the bicycle 1 is, the more opaque the display color is, by changing the transparency of the color in stages. By this means, it is possible to display travel routes which are hard on the legs of the cyclist in an opaque color, and therefore help the user of the information processing apparatus 2 easily and quickly acquire appropriate information.

Moreover, the display color of travel routes may be changed depending on the heart date of the cyclist of the bicycle 1 acquired by the heartbeat sensor 103. For example, the display color may be changed by changing the transparency in stages such that the higher the heart rate is, the more opaque the color is. By this means, it is possible to display a travel route, for example, which puts physical strain on cyclists, in an opaque color, and therefore help the user of the information processing apparatus 2 easily and quickly acquire appropriate information.

Moreover, the display color of travel routes may be changed depending on the average slope of the travel routes for the bicycle 1 acquired by the slope sensor 104. For example, the display color is changed by changing the transparency in stages such that the greater the average slope is, the more opaque the color is.

By this means, for example, the travel route hard on the legs of the cyclist due to an ascending slope, which cannot be determined only based on the output of the power sensor 111, is displayed in an opaque color. Therefore, it is possible to help the user of the information processing apparatus 2 easily and quickly acquire appropriate information.

Moreover, the display color of travel routes may be changed depending on the atmospheric pressure around the bicycle 1 acquired by the atmospheric pressure sensor 105, and the altitude calculated based on the atmospheric pressure. For example, the display color is changed by changing the transparency in stages such that the higher the atmospheric pressure is, the more opaque the color is. By this means, it is possible to know a difference between running states due to a difference in altitude, and therefore help the user of the information processing apparatus 2 easily and quickly acquire appropriate information.

In addition, the display color of travel routes may be changed depending on the wind speed relative to the bicycle 1, which is acquired by the wind speed sensor 106. For example, the display color is changed by changing the transparency in stages such that the higher the wind speed is, the more opaque the color is.

By this means, it is possible to display a local change in the wind speed where, for example, the speed increases depending on building conditions, and therefore help the user of the information processing apparatus 2 easily and quickly acquire appropriate information.

Moreover, the display color of travel routes may be changed depending on the temperature around the bicycle 1, which is acquired by the temperature sensor 107. For example, the display color is changed by changing the transparency in stages such that the higher the temperature is, the more opaque the color is.

By this means, it is possible to display a change in the temperature in, for example, a place where the temperature increases due to direct sunlight and a place where the temperature decreases due to shade. Therefore, it is possible to help the user of the information processing apparatus 2 easily and quickly acquire appropriate information.

Moreover, the display color of travel routes may be changed depending on the humidity around the bicycle 1 acquired by the humidity sensor 108. For example, the display color is changed by changing the transparency in stages such that the higher the humidity is, the more opaque the color is. By this means, it is possible to determine the sensory temperature based on, for example, the temperature and the humidity, and therefore it is possible to help the user of the information processing apparatus 2 easily and quickly acquire appropriate information.

Moreover, in addition to changing the transparency of the display color, which is a single color such as red as described above, another configuration is possible where a plurality of colors are used and the display color is changed depending on the number of times of runs, or a combination is possible where changing the transparency is applied to the above-described configurations.

Furthermore, the display color of travel routes may be changed depending on the positional information and the current time acquired by the GPS sensor 109. For example, the display color is changed by time zones such as before noon, afternoon and night. By this means, it is possible to display the travel distance, the running speed and so forth for each time zone, and therefore help the user of the information processing apparatus 2 easily and quickly acquire appropriate information.

Furthermore, by associating the cyclist's profile information with travel routes, it is possible to display travel route information corresponding to each physical information such as height and weight. In this case, for example, it is possible to easily and quickly know what travel route is selected by persons similar to the cyclist in physique and age.

Here, by acquiring the above-described profile information as travel route information, the cyclist can run the bicycle 1 while displaying a travel route in more detail, which is suitable for the cyclist. By this means, for example, the cyclist can do more adequate training. In addition, by acquiring travel route information on a plurality of other cyclists, the cyclist can compare the athletic capabilities and the travel routes between the cyclist and other persons, and therefore easily make a plan for travel routes.

Moreover, by acquiring pieces of travel route information on one cyclist, the cyclist can compare between the cyclist's own records, and this may increase the cyclist's motivation for training.

Moreover, cyclists tend to select comfortable travel routes and adequate travel routes fit for their purposes, and this inevitably leads to increase the number of times those travel routes are used. Thus, with the information processing apparatus 2 according to the present embodiment, the travel route easy for the cyclist of the bicycle 1 is displayed, for example, in an opaque red with the transparency of zero or approximately zero on the map.

Therefore, it can be understood that this travel route in an opaque red is generally "easy for cyclists to run." In addition, it is possible to collect information on not only one cyclist but also a plurality of cyclists, and therefore generalize the definition of "a road easy to run" and improve accuracy by combining information on a plurality of cyclists.

Next, the information processing apparatus 2 determines whether or not to continue a series of processing from data measurement to display of travel routes described above (Step S9). As a result, when the processing is continued (Yes), it is determined whether or not to reset the information processing apparatus 2 (Step S10), and, when the information processing apparatus 2 is reset (Yes), the step returns to Step S1, and, on the other hand, when the information processing apparatus 2 is not reset (No), the step returns to Step S2.

As described above, the information processing apparatus 2 according to Embodiment 1 can create and output travel route information obtained by associating bicycle travel route map information with bicycle information, cyclist information, external environmental information and so forth when the bicycle is running.

By this means, the cyclist can visually recognize, for example, what travel route the persons prefer who have the same physical features such as physique and age and athletic capability as the cyclist. Therefore, it is possible to easily and quickly display information fit for a purpose.

### Embodiment 2

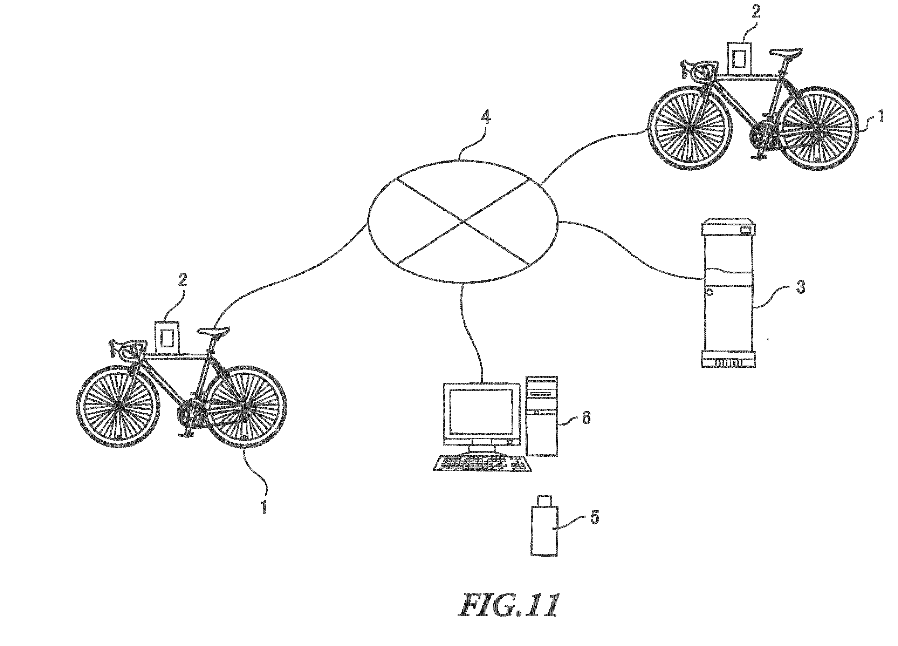

FIG. 11 is a schematic view showing the configuration of an information processing system according to Embodiment 2 of the present invention. As shown in FIG. 11, the information processing system according to the present embodiment includes an external information processing server 3. The information processing apparatus 2 mounted on the bicycle 1 provides data to the information processing server 3 while acquiring data generated in another information processing apparatus 2, from the information processing server 3.

In addition, the data from the information processing apparatus 2 mounted on the bicycle 1 may be saved in a computer 6 such as a personal computer, via a network 4 (communication network) such as Internet or a removable and portable storage medium 5 such as a USB memory, and then uploaded from the computer 6 to the information processing server 3. In this case, the information processing apparatus 2 downloads new data from the information processing server 3 and stores the data in the storage part 20 in the information processing apparatus 2.

Here, Embodiment 2 is basically the same as the above-described Embodiment 1 in that the bicycle 1 with the information processing apparatus 2 acquires travel route information, and the operation of each part of the information processing apparatus 2. Hereinafter, the same parts as in the information processing apparatus 2 described in Embodiment 1 are assigned the same reference numerals, and overlapping descriptions will be omitted, but different points will be mainly explained.

With the information processing system according to the present embodiment, the information processing apparatus 2 is mounted on the bicycle 1, and a plurality of cyclists acquire data using a plurality of information processing apparatus 2 to create travel route information. Here, note that various data is communicated at any time between a plurality of information processing apparatuses 2 and the information processing server 3.

In addition, a configuration is possible where the information processing apparatus 2 only performs processing including measurement of various data and inputting cyclist's information; the information processing server 3 receives the data and creates travel route information; and each information processing apparatus 2 downloads and displays the travel route information. That is, the above-described functions of the travel route information creating part 30, the travel route information merging part 40 and so forth may be taken on by the information processing server 3 over the network 4.

For example, a system is possible that when information on a plurality of cyclists is uploaded via Internet, travel route information is automatically created in the server side and then downloaded in the information processing apparatus 2 and displayed. By using this information processing system, it is possible to provide services to send information including a map display area, a display size, running count information, exercise intensity, an exercise intensity value, from the information processing apparatus 2 to the information processing server 3 and search desired map information and download the information.

Here, the present embodiment adopts a configuration where only one information processing server 3, one computer 6 and two information processing apparatuses 2 are connected to each other via the network 4 in the information processing system. However, another configuration is possible where a plurality of information processing servers 3, a plurality of computers 6 and three or more information processing apparatuses 2 are connected to each other in the information processing system.

### Another embodiment

In addition to the above described embodiments, modification and alteration are encompassed in the present invention within the scope within which the object of the present invention can be achieved. For example, an amount of information of displayed routes may be changed according to the size of a displayed map area. To be more specific, when a bicycle map is displayed in a large area mode, a route used for running, for example, 100 or more times, is displayed as a standard.

Meanwhile, when a bicycle map is displayed in a zoom mode to display a limited area, a route used for running one or more times is displayed as a standard. By this means, it is possible to keep a certain amount of travel route information and so forth displayed on the monitor 400 and prevent the display screen from becoming complex and being difficult to see for the cyclist, and therefore reduce cyclist's burden. In addition, the information processing apparatus 2 can reduce the period of time to read data from the storage part 20 and also reduce memory utilization.

Moreover, although with the above-described embodiments, a configuration has been described where the information processing apparatus performs computation and display while the bicycle is running, another configuration is possible, which provides a computation method or a program executed on a computer.

For example, a program executed on a personal computer is provided, and the cyclist inputs a measurement result to the personal computer at home to save GPS information, and then computation as described above is performed, so that a bicycle map and so forth are displayed on a screen.

Moreover, start point information and end point information included in running information may be added to search results. For example, by inputting latitude and longitude information on the start point for search, map information is created using only the route group having the start point near the latitude and longitude, which is stored in the storage part 20. Then, the created map information is displayed on the monitor 40.

By this means, when start point information is set as the cyclist's home, it is possible to know, for example, what routes the persons who live in the same neighborhood prefer and run. That is, it is possible to visualize search, comparison and so forth of travel routes in a user-friendly manner.

### List of Reference Signs

- 1: bicycle
- 2: information processing apparatus
- 3: information processing server
- 4: network
- 5: portable storage medium
- 6: computer
- 10: running information acquiring unit
- 20: cyclist information acquiring part
- 20: storage part
- 30: travel route information creating part
- 40: travel route information merging part
- 50: bicycle map creating part
- 60: bicycle map display part
- 70: data output part
- 80: data input part
- 100: sensor group
- 200: control device
- 201: CPU
- 202: memory
- 203: image control circuit
- 204: audio control circuit
- 205: communication control circuit
- 206: bus
- 300: operation I/F
- 301: switch
- 302: operation key
- 400: monitor
- 500: speaker
- 600: communication I/F"
- 700: timer

## Claims

1. An information processing apparatus (2) comprising:
- a first acquiring part (10) configured to acquire bicycle positional information regarding a moving bicycle (1), by use of a positioning system;
- a second acquiring part (10) configured to acquire bicycle-related information regarding the bicycle (1) when the bicycle positional information is acquired;
wherein the information processing apparatus (2) further comprises:
- a travel route information creating part (30) configured to create travel route information indicating a travel route through which the bicycle (1) runs by associating the bicycle positional information with the bicycle-related information;
- a storage part (20) configured to store the travel route information in a storage device;
- a map storage part configured to store map information;
- a merging part (40) configured to merge pieces of travel route information created by different information processing apparatuses (2), the pieces of travel route information regarding different cyclists, wherein the merging part (40) is configured to divide the travel routes into sections at a dividing point where two travel routes branch off, and to create travel route information for each section;
- a bicycle map creating part (50) configured to create a bicycle map by superimposing the travel route information merged by the merging part (40), on the map information stored in the map storage part; and
- an output part (70) configured to detect the number of bicycle (1) runs from the travel route information merged by the merging part (40), and display the travel route information on a display device with different colors or transparencies of the travel route, depending on at least the detected number of bicycle (1) runs, in order to allow a cyclist to classify the frequency the bicycle (1) runs based on the bicycle map created by the bicycle map creating part (50).

2. The apparatus (2) according to claim 1,
wherein the second acquiring part (10) acquires at least one of running condition information, cyclist information and running time environmental information regarding the bicycle (1); and
wherein the travel route information creating part (30) creates the travel route information in a format that allows classification using information acquired by the second acquiring part (10).

3. The apparatus (2) according to claim 2,
wherein the cyclist information is cyclist's physical information.

4. The apparatus (2) according to claim 2,
wherein the cyclist information is the cyclist's profile information.

5. The apparatus according to claim 3,
further comprising an input part (80) configured to input the cyclist's physical information,
wherein the output part (70) selects the travel route information associated with the cyclist's physical information and outputs selected travel route information separately from another travel route information.

6. The apparatus (2) according to claim 4,
further comprising an input part (80) configured to input the cyclist's profile information,
wherein the output part (70) selects the travel route information associated with the cyclist's profile information and outputs selected travel route information separately from another travel route information.

7. The apparatus (2) according to anyone of claims 1 to 6,
further comprising a third acquiring part (13) configured to acquire traveling direction information regarding the bicycle,
wherein the travel route information creating part (3) creates the travel route information in a format that allows classification using the traveling direction information.

8. The apparatus (2) according to anyone of claims 1 to 7,
further comprising a fourth acquiring part configured to acquire acceleration information when the bicycle is running, by an acceleration sensor (110) mounted on the bicycle (1),
wherein the travel route information creating part (30) creates the travel route information in a format that allows classification using the acceleration information.

9. The apparatus (2) according to anyone of claims 1 to 8,
wherein the merging part (40) merges the pieces of travel route information regarding one cyclist.

10. The apparatus (2) according to anyone of claims 1 to 9,
wherein the output part (70) outputs the travel route information to an external device via at least one of a network (4), a removable and portable storage medium and a communication interface.

11. The apparatus (2) according to any of claims 1 to 10,
wherein the output part (70) displays the bicycle map on the display device mounted internally or externally to the information processing apparatus (2).

12. An information processing method comprising:
- a first acquiring step of acquiring bicycle positional information regarding a moving bicycle (1), by use of a positioning system;
- a second acquiring step of acquiring bicycle-related information regarding the bicycle (1) when the bicycle positional information is acquired;
- a travel route information creating step of creating travel route information obtained by associating the bicycle positional information with the bicycle-related information;
- a storage step of storing the travel route information in a storage device;
- a map storage step of storing map information:
- a merging step of merging pieces of travel route information created by different information processing apparatuses (2), the pieces of travel route information regarding different cyclists, wherein the merging step is configured to divide the travel routes into sections at a dividing point where two travel routes branch off, and to create travel route information for each section;
- a bicycle map creating step of creating a bicycle map by superimposing the travel route information merged in the merging step, on the map information stored in the map storage step; and
- an output step of detecting a number of bicycle (1) runs from the travel route information merged in the merging step, and displaying the travel route information on a display device with different colors or transparencies of the travel route, depending on at least the detected number of bicycle (1) runs, in order to allow a cyclist to classify the frequency the bicycle (1) runs based on the bicycle map created in the bicycle map creating step.

13. An information processing system including a plurality of first apparatuses (2) and one or more second apparatuses that communicate information with the first apparatuses, wherein:
each of the first apparatuses (2) includes:
- a first acquiring part (10) configured to acquire bicycle positional information regarding a moving bicycle (1), by use of a positioning system;
- a second acquiring part (10) configured to acquire bicycle-related information regarding the bicycle (1) when the bicycle positional information is acquired;
- a travel route information creating part (30) configured to create travel route information obtained by associating the bicycle positional information with the bicycle-related information;
- a storage part (20) configured to store the travel route information in a storage device;
- a map storage part configured to store map information;
- a bicycle map creating part (50) configured to create a bicycle map by superimposing the travel route information on the map information stored in the map storage part; and
- an output part (70) configured to detect the number of bicycle (1) runs based on the travel route information merged by the merging part (40), and display the travel route information on a display device with different colors or transparencies of the travel route, depending on at least the number of bicycle (1) runs,
wherein the one or more second apparatuses includes a merging part (40) configured to merge pieces of travel route information created by the plurality of first apparatuses (2), wherein the pieces of travel route information relates to different cyclists, wherein the merging part (40) is configured to divide the travel routes into sections at a dividing point where two travel routes branch off, and to create travel route information for each section.

14. The system according to claim 13,
wherein the first apparatus (2) and the second apparatus are connected to one another via a network (4).

15. The system according to claim 13,
wherein the second apparatus is provided in a server apparatus (3) connected to the first apparatus (2) as a client terminal via the network (4).

16. The system according to claim 14,
wherein the second apparatus includes a personal computer (6) configured to be able to connect to the network (4).

17. A computer-readable program that allows a computer (6) to perform:
- a first acquiring process of acquiring bicycle positional information regarding a moving bicycle (1), by use of a positioning system; and
- a second acquiring process of acquiring bicycle-related information regarding the bicycle (1) when the bicycle positional information is acquired;
**characterized in that**
the computer-readable program is adapted to allow the computer (6) to perform:
-- a travel route information creating process of creating travel route information indicating a travel route through which the bicycle (1) runs by associating the bicycle positional information with the bicycle-related information;
-- a storage process of storing the travel route information in a storage device;
-- a map storage process of storing map information;
-- a merging process of merging pieces of travel route information created by different information processing apparatuses (2), the pieces of travel route information regarding different cyclists, wherein the merging step is configured to divide the travel routes into sections at a dividing point where two travel routes branch off, and to create travel route information for each section;
-- a bicycle map creating process of creating a bicycle map by superimposing the travel route information merged by the merging process, on the map information stored by the map storage process; and
-- an output process of detecting the number of bicycle (1) runs based on the travel route information merged by the merging process, and displaying the travel route information on a display device with different colors or transparencies of the travel route, depending on at least the detected number of bicycle (1) runs, in order to allow a cyclist to classify the frequency the bicycle (1) runs based on the bicycle map created by the bicycle map creating process.

## Patentansprüche

1. Informationsverarbeitungsgerät (2), das folgendes aufweist:
- einen ersten Erfassungsbereich (10), der konfiguriert ist, um Fahrradpositionsinformationen, die sich auf ein sich bewegendes Fahrrad (1) beziehen, durch die Verwendung eines Positionsbestimmungssystems zu erfassen;
- einen zweiten Erfassungsbereich (10), der konfiguriert ist, um Fahrradbezogene Informationen, die sich auf das Fahrrad (1) beziehen, zu erfassen, wenn die Fahrradpositionsinformationen erfasst werden;
wobei das Informationsverarbeitungsgerät (2) weiterhin folgendes aufweist:
- einen Fahrtrouteninformations-Erzeugungsbereich (30), der konfiguriert ist, um Fahrtrouteninformationen, die eine Fahrtroute angeben, über die das Fahrrad (1) fährt, durch Verknüpfen der Fahrradpositionsinformationen mit den Fahrrad-relevanten Informationen zu erzeugen;
- einen Speicherbereich (20), der konfiguriert ist, um die Fahrtrouteninformationen in einer Speichervorrichtung zu speichern;
- einen Kartenspeicherbereich, der konfiguriert ist, um Karteninformationen zu speichern;
- einen Zusammenführungsbereich (40), der konfiguriert ist, um Fragmente von Fahrtrouteninformationen zusammenzuführen, die von verschiedenen Informationsverarbeitungsgeräten (2) erzeugt worden sind, wobei sich die Fragmente von Fahrtrouteninformationen auf verschiedene Fahrradfahrer beziehen, wobei der Zusammenführungsbereich (40) konfiguriert ist, um die Fahrtrouten an einem Teilungspunkt in Abschnitte zu unterteilen, an dem sich zwei Fahrtrouten verzweigen, und um für jeden Abschnitt Fahrtrouteninformationen zu erzeugen;
- einen Fahrradkarten-Erzeugungsbereich (50), der konfiguriert ist, um eine Fahrradkarte durch Überlagern der durch den Zusammenführungsbereich (40) zusammengeführten Fahrtrouteninformationen mit den in dem Kartenspeicherbereich gespeicherten Karteninformationen zu erzeugen; und
- einen Ausgabebereich (70), der konfiguriert ist, um die Anzahl von Fahrrad (1)-Fahrten aus den von dem Zusammenführungsbereich (40) zusammengeführten Fahrtrouteninformationen zu detektieren und die Fahrtrouteninformationen auf einer Anzeigevorrichtung mit verschiedenen Farben oder Transparenzen der Fahrtroute in Abhängigkeit von zumindest der detektierten Anzahl von Fahrrad (1)-Fahrten anzuzeigen, um es einem Fahrradfahrer zu ermöglichen, die Häufigkeit der Fahrrad (1)-Fahrten auf der Grundlage der durch den Fahrradkarten-Erzeugungsbereich (50) erzeugten Fahrradkarte zu klassifizieren.

2. Gerät (2) nach Anspruch 1,
wobei der zweite Erfassungsbereich (10) mindestens eine Information von Fahrzustandsinformationen, Fahrradfahrer-Informationen und Fahrzeit-Umgebungsinformationen, die sich auf das Fahrrad (1) beziehen, erfasst; und wobei der Fahrtrouteninformations-Erzeugungsbereich (30) die Fahrtrouteninformationen in einem Format erzeugt, das die Klassifizierung unter Verwendung von durch den zweiten Erfassungsbereich (10) erfassten Informationen ermöglicht.

3. Gerät (2) nach Anspruch 2,
wobei die Fahrradfahrer-Informationen Fahrradfahrer-Physis-Informationen sind.

4. Gerät (2) nach Anspruch 2,
wobei die Fahrradfahrer-Informationen die Fahrradfahrer-Profilinformationen sind.

5. Gerät nach Anspruch 3,
das weiterhin folgendes aufweist:
einen Eingabebereich (80), der konfiguriert ist, um die Fahrradfahrer-Physis-Informationen einzugeben,
wobei der Ausgabebereich (70) die mit den Fahrradfahrer-Physis-Informationen verknüpften Fahrtrouteninformationen auswählt und ausgewählte Fahrtrouteninformationen getrennt von anderen Fahrtrouteninformationen ausgibt.

6. Gerät (2) nach Anspruch 4,
das weiterhin folgendes aufweist:
einen Eingabebereich (80), der konfiguriert ist, um die Fahrradfahrer-Profil-Informationen einzugeben,
wobei der Ausgabebereich (70) die mit den Fahrradfahrer-Profil-Informationen verknüpften Fahrtrouteninformationen auswählt und ausgewählte Fahrtrouteninformationen getrennt von anderen Fahrtrouteninformationen ausgibt.

7. Gerät (2) nach einem der Ansprüche 1 bis 6,
das weiterhin folgendes aufweist: einen dritten Erfassungsbereich (13), der konfiguriert ist, um Fahrtrichtungsinformationen, die sich auf das Fahrrad beziehen, zu erfassen, wobei der Fahrtrouteninformations-Erzeugungsbereich (3) die Fahrtrouteninformationen in einem Format erzeugt, das eine Klassifizierung unter Verwendung der Fahrtrichtungsinformationen ermöglicht.

8. Gerät (2) nach einem der Ansprüche 1 bis 7,
das weiterhin folgendes aufweist: einen vierten Erfassungsbereich, der konfiguriert ist, um Beschleunigungsinformationen, wenn das Fahrrad fährt, durch einen an dem Fahrrad (1) befestigten Beschleunigungssensor (110) zu erfassen,
wobei der Fahrtrouteninformations-Erzeugungsbereich (30) die Fahrtrouteninformationen in einem Format erzeugt, das die Klassifizierung unter Verwendung der Beschleunigungsinformationen ermöglicht.

9. Gerät (2) nach einem der Ansprüche 1 bis 8,
wobei der Zusammenführungsbereich (40) die Fragmente von Fahrtrouteninformationen, die einen Fahrradfahrer betreffen, zusammenführt.

10. Gerät (2) nach einem der Ansprüche 1 bis 9,
wobei der Ausgabebereich (70) die Fahrtrouteninformationen an eine externe Vorrichtung über mindestens eine Komponente von einem Netzwerk (4), einem abnehmbaren und tragbaren Speichermedium und einer Kommunikationsschnittstelle ausgibt.

11. Gerät (2) nach einem der Ansprüche 1 bis 10,
wobei der Ausgabebereich (70) die Fahrradkarte auf der an dem Informationsverarbeitungsgerät (2) intern oder extern angebrachten Anzeigevorrichtung anzeigt.

12. Informationsverarbeitungsverfahren, das folgendes aufweist:
- einen ersten Erfassungsschritt zur Erfassung von Fahrradpositionsinformationen, die sich auf ein sich bewegendes Fahrrad (1) beziehen, durch die Verwendung eines Positionsbestimmungssystems;
- einen zweiten Erfassungsschritt zur Erfassung von Fahrradpositionsinformationen, die sich auf das Fahrrad (1) beziehen, wenn die Fahrradpositionsinformationen erfasst werden;
- einen Fahrtrouteninformations-Erzeugungsschritt zur Erzeugung von Fahrtrouteninformationen, die durch Verknüpfen der Fahrradpositionsinformationen mit den Fahrrad-relevanten Informationen erhalten werden;
- einen Speicherschritt zur Speicherung der Fahrtrouteninformationen in einer Speichervorrichtung;
- einen Kartenspeicherschritt zur Speicherung von Karteninformationen;
- einen Zusammenführungsschritt zum Zusammenführen von Fragmenten von mit verschiedenen Informationsverarbeitungsgeräten (2) erzeugten Fahrtrouteninformationen, wobei die Fragmente von Fahrtrouteninformationen verschiedene Fahrradfahrer betreffen, wobei der Zusammenführungsschritt konfiguriert ist, um die Fahrtrouten in Abschnitte an einem Teilungspunkt zu unterteilen, an dem sich zwei Fahrtrouten verzweigen, und um für jeden Abschnitt Fahrtrouteninformationen zu erzeugen;
- einen Fahrradkarten-Erzeugungsschritt zur Erzeugung einer Fahrradkarte durch Überlagern der in dem Zusammenführungsschritt zusammengeführten Fahrtrouteninformationen mit den in dem Kartenspeicherschritt gespeicherten Karteninformationen; und
- einen Ausgabeschritt zum Detektieren einer Anzahl von Fahrrad (1)-Fahrten aus den in dem Zusammenführungsschritt zusammengeführten Fahrtrouteninformationen, und zum Anzeigen der Fahrtrouteninformationen auf einer Anzeigevorrichtung mit verschiedenen Farben oder Transparenzen der Fahrtrouten in Abhängigkeit von zumindest der detektierten Anzahl von Fahrrad (1)-Fahrten, um es einem Fahrradfahrer zu ermöglichen, die Häufigkeit der Fahrrad (1)-Fahrten auf der Grundlage der in dem Fahrradkarten-Erzeugungsschritt erzeugten Fahrradkarten zu klassifizieren.

13. Informationsverarbeitungssystem, das eine Vielzahl von ersten Geräten (2) und ein oder mehrere zweite Geräte aufweist, die Informationen mit den ersten Geräten austauschen, wobei:
die ersten Geräte (2) jeweils folgendes aufweisen:
- einen ersten Erfassungsbereich (10), der konfiguriert ist, um Fahrradpositionsinformationen hinsichtlich eines sich bewegenden Fahrrads (1) durch die Verwendung eines Positionsbestimmungssystems zu erfassen;
- einen zweiten Erfassungsbereich (10), der konfiguriert ist, um Fahrradbezogene Informationen, die das Fahrrad (1) betreffen, zu erfassen, wenn die Fahrradpositionsinformationen erfasst werden;
- einen Fahrtrouteninformations-Erzeugungsbereich (30), der konfiguriert ist, um Fahrtrouteninformationen zu erzeugen, die durch Verknüpfen der Fahrradpositionsinformationen mit den Fahrrad-relevanten Informationen erhalten wurden;
- einen Speicherbereich (20), der konfiguriert ist, um die Fahrtrouteninformationen in einer Speichervorrichtung zu speichern;
- einen Kartenspeicherbereich, der konfiguriert ist, um Karteninformationen zu speichern;
- einen Fahrradkarten-Erzeugungsbereich (50), der konfiguriert ist, um eine Fahrradkarte durch Überlagern der Fahrtrouteninformationen mit den in dem Kartenspeicherbereich gespeicherten Karteninformationen zu erzeugen; und
- einen Ausgabebereich (70), der konfiguriert ist, um die Anzahl von Fahrrad (1)-Fahrten auf der Grundlage von durch den Zusammenführungsbereich (40) zusammengeführten Fahrtrouteninformationen zu detektieren und um die Fahrtrouteninformationen auf einer Anzeigevorrichtung mit verschiedenen Farben oder Transparenzen der Fahrtrouten in Abhängigkeit von zumindest der Anzahl von Fahrrad (1)-Fahrten anzuzeigen,
wobei das eine oder die mehreren zweiten Geräte einen Zusammenführungsbereich (40) aufweisen, der konfiguriert ist, um Fragmente von Fahrtrouteninformationen zusammenzuführen, die durch die Vielzahl von ersten Geräten (2) erzeugt worden sind, wobei die Fragmente von Fahrtrouteninformationen verschiedene Fahrradfahrer betreffen, wobei der Zusammenführungsbereich (40) konfiguriert ist, um die Fahrtrouten in Abschnitte an einem Teilungspunkt zu unterteilen, an dem sich zwei Fahrtrouten verzweigen, und um für jeden Abschnitt Fahrtrouteninformationen zu erzeugen.

14. System nach Anspruch 13,
wobei das erste Gerät (2) und das zweite Gerät über ein Netzwerk (4) miteinander verbunden sind.

15. System nach Anspruch 13,
wobei das zweite Gerät in einem Server (3) vorgesehen ist, der mit dem ersten Gerät (2) als ein Client-Endgerät über das Netzwerk (4) verbunden ist.

16. System nach Anspruch 14,
wobei das zweite Gerät einen Personal Computer (6) aufweist, der konfiguriert ist, um in der Lage zu sein, mit dem Netzwerk (4) verbunden zu werden.

17. Computerlesbares Programm, das es einem Computer (6) ermöglicht, Folgendes durchzuführen:
- ein erstes Erfassungsverfahren zur Erfassung von Fahrradpositionsinformationen, die sich auf ein sich bewegendes Fahrrad (1) beziehen, durch Verwendung eines Positionsbestimmungssystems; und
- ein zweites Erfassungsverfahren zur Erfassung von Fahrrad-relevanten Informationen, die sich auf das Fahrrad (1) beziehen, wenn die Fahrradpositionsinformationen erfasst werden;
**dadurch gekennzeichnet,**
**dass** das computerlesbare Programm dazu ausgelegt ist, es dem Computer (6) zu ermöglichen, Folgendes durchzuführen:
- ein Fahrtrouteninformations-Erzeugungsverfahren zur Erzeugung von Fahrtrouteninformationen, die eine Fahrtroute angeben, über die das Fahrrad (1) fährt, durch Verknüpfen der Fahrradpositionsinformationen mit den Fahrrad-relevanten Informationen;
- ein Speicherverfahren zur Speicherung der Fahrtrouteninformationen in einer Speichervorrichtung;
- ein Kartenspeicherverfahren zur Speicherung von Karteninformationen;
- ein Zusammenführungsverfahren zur Zusammenführung von Fragmenten von Fahrtrouteninformationen, die durch verschiedene Informationsverarbeitungsgeräte (2) erzeugt worden sind, wobei die Fragmente von Fahrtrouteninformationen verschiedene Fahrradfahrer betreffen, wobei der Zusammenführungsschritt konfiguriert ist, um die Fahrtrouten in Abschnitte an einem Teilungspunkt zu unterteilen, an dem sich zwei Fahrtrouten verzweigen, und um für jeden Abschnitt Fahrtrouteninformationen zu erzeugen;
- ein Fahrradkarten-Erzeugungsverfahren zur Erzeugung einer Fahrradkarte durch Überlagern der durch das Zusammenführungsverfahren zusammengeführten Fahrtrouteninformationen mit den durch den Kartenspeicherverfahren gespeicherten Karteninformationen; und
- ein Ausgabeverfahren zum Detektieren der Anzahl von Fahrrad (1)-Fahrten auf der Grundlage der durch das Zusammenführungsverfahren zusammengeführten Fahrtrouteninformationen, und zum Anzeigen der Fahrtrouteninformationen auf einer Anzeigevorrichtung mit verschiedenen Farben oder Transparenzen der Fahrtrouten in Abhängigkeit von zumindest der nachgewiesenen Anzahl von Fahrrad (1)-Fahrten, um es einem Fahrradfahrer zu ermöglichen, die Häufigkeit der Fahrrad (1)-Fahrten auf der Grundlage der durch das Fahrradkarten-Erzeugungsverfahren erzeugten Fahrradkarten zu klassifizieren.

## Revendications

1. Appareil de traitement d'information (2) comprenant:
- une première partie d'acquisition (10) configurée pour acquérir une information de position de bicyclette concernant une bicyclette en mouvement (1), en utilisant un système de positionnement;
- une seconde partie d'acquisition (10) configurée pour acquérir des informations en relation avec une bicyclette concernant la bicyclette (1) quand l'information de position de bicyclette est acquise;
dans lequel l'appareil de traitement d'information (2) comprend en outre:
- une partie de création d'information d'itinéraire de déplacement (30) configurée pour créer une information d'itinéraire de déplacement indiquant un itinéraire de déplacement sur lequel la bicyclette (1) circule en associant l'information de position de bicyclette avec l'information en relation avec la bicyclette;
- une partie de stockage (20) configuré pour stocker l'information d'itinéraire de déplacement dans un dispositif de stockage;
- une partie de stockage de carte configurée pour stocker des informations de carte;
- une partie de fusion (40) configurée pour fusionner des morceaux d'information d'itinéraire de déplacement créés par différents appareils de traitement d'information (2), les morceaux d'information d'itinéraire de déplacement concernant différents cyclistes, dans lequel la partie de fusion (40) est configurée pour diviser les itinéraires de déplacement en sections à un point de division auquel deux itinéraires de déplacement sont ramifiés, et pour créer une information d'itinéraire de déplacement pour chaque section;
- une partie de création de carte de bicyclette (50) configurée pour créer une carte de bicyclette en superposant l'information d'itinéraire de déplacement fusionnée par la partie de fusion (40), sur l'information de carte stockée dans la partie de stockage de carte; et
- une partie de sortie (70) configurée pour détecter le nombre de parcours de la bicyclette (1) à partir de l'information d'itinéraire de déplacement fusionnée par la partie de fusion (40), et pour afficher l'information d'itinéraire de déplacement sur un dispositif d'affichage avec différentes couleurs ou différents niveaux de transparence de l'itinéraire de déplacement, en fonction au moins du nombre détecté de parcours de la bicyclette (1), afin de permettre à un cycliste de classifier la fréquence des parcours de la bicyclette (1) en se basant sur la carte de bicyclette créée par la partie de création de cartes de bicyclette (50).

2. Appareil (2) selon la revendication 1,
dans lequel la seconde partie d'acquisition (10) acquiert au moins une information parmi une information de condition de circulation, une information sur le cycliste et une information environnementale sur le temps de circulation concernant la bicyclette (1); et
dans lequel la partie de création d'information d'itinéraire de déplacement (30) crée l'information d'itinéraire de déplacement dans un format qui permet une classification en utilisant l'information acquise par la seconde partie d'acquisition (10).

3. Appareil (2) selon la revendication 2,
dans lequel l'information sur le cycliste et une information physique sur le cycliste.

4. Appareil (2) selon la revendication 2,
dans lequel l'information sur le cycliste est une information sur le profil du cycliste.

5. Appareil selon la revendication 3,
comprenant en outre une partie d'entrée (80) configurée pour entrer l'information physique sur le cycliste,
dans lequel la partie de sortie (70) sélectionne l'information physique sur le cycliste et délivre une information d'itinéraire de déplacement sélectionnée séparément d'une autre information d'itinéraire de déplacement.

6. Appareil (2) selon la revendication 4,
comprenant en outre une partie d'entrée (80) configurée pour entrer l'information sur le profil du cycliste,
dans lequel la partie de sortie (70) sélectionne l'information sur le profil du cycliste et délivre l'information d'itinéraire de déplacement sélectionnée séparément d'une autre information d'itinéraire de déplacement.

7. Appareil (2) selon l'une quelconque des revendications 1 à 6, comprenant en outre une troisième partie d'acquisition (13) configurée pour acquérir une information de direction de circulation concernant la bicyclette, dans lequel la partie de création d'information d'itinéraire de déplacement (3) crée l'information d'itinéraire de déplacement dans un format qui permet une classification en utilisant l'information de direction de circulation.

8. Appareil (2) selon l'une quelconque des revendications 1 à 7, comprenant en outre une quatrième partie d'acquisition configurée pour acquérir une information d'accélération quand la bicyclette est en circulation, par un capteur d'accélération (110) monté sur la bicyclette (1), dans lequel la partie de création d'information d'itinéraire de déplacement (30) crée l'information d'itinéraire de déplacement dans un format qui permet une classification en utilisant l'information d'accélération.

9. Appareil (2) selon l'une quelconque des revendications 1 à 8,
dans lequel la partie de fusion (40) fusionne les morceaux d'information d'itinéraire de déplacement concernant un cycliste.

10. Appareil (2) selon l'une quelconque des revendications 1 à 9,
dans lequel la partie de sortie (70) sort l'information d'itinéraire de déplacement vers un dispositif externe via au moins un moyen parmi un réseau (4), un support de stockage amovible et portable, et une interface de communication.

11. Appareil (2) selon l'une quelconque des revendications 1 à 10,
dans lequel la partie de sortie (70) affiche la carte de bicyclette sur le dispositif d'affichage monté de manière interne ou externe sur l'appareil de traitement d'information (2).

12. Procédé de traitement d'information comprenant:
- une première étape d'acquisition consistant à acquérir une information de position de bicyclette concernant une bicyclette en déplacement (1), en utilisant un système de positionnement;
- une seconde étape d'acquisition consistant à acquérir une information en relation avec la bicyclette, concernant la bicyclette (1) lorsqu'on acquiert l'information de position de bicyclette;
- une étape de création d'information d'itinéraire de déplacement consistant à créer une information d'itinéraire de déplacement obtenue en associant l'information de position de bicyclette avec l'information en relation avec la bicyclette;
- une étape de stockage consistant à stocker l'information d'itinéraire de déplacement dans un dispositif de stockage;
- une étape de stockage de carte consistant à stocker une information de carte;
- une étape de fusion consistant à fusionner des morceaux d'information d'itinéraire de déplacement créés par différents appareils de traitement d'information (2), les morceaux d'information d'itinéraire de déplacement concernant différents cyclistes, dans lequel l'étape de fusion est configurée pour diviser les itinéraires de déplacement en sections à un point de division où l'itinéraire de déplacement se ramifie, et à créer une information d'itinéraire de déplacement pour chaque section;
- une étape de création de carte de bicyclette consistant à créer une carte de bicyclette en superposant l'information d'itinéraire de déplacement fusionnée dans l'étape de fusion, sur l'information de carte stockée dans l'étape de stockage de carte; et
- une étape de sortie consistant à détecter un nombre de parcours de bicyclette (1) à partir de l'information d'itinéraire de déplacement fusionnée dans l'étape de fusion, et afficher l'information d'itinéraire de déplacement sur un dispositif d'affichage avec des couleurs différentes ou des niveaux de transparence différents de l'itinéraire de déplacement, en dépendance d'au moins le nombre détecté de parcours de bicyclette (1), afin de permettre à un cycliste de classifier la fréquence des parcours de la bicyclette (1) sur la base de la carte de bicyclette créée dans l'étape de création de carte de bicyclette.

13. Système de traitement d'information incluant une pluralité de premiers appareils (2) et un ou plusieurs seconds appareils qui communiquent des informations avec les premiers appareils, dans lequel:
chacun des premiers appareils (2) inclut:
- une première partie d'acquisition (10) configurée pour acquérir une information de position de bicyclette concernant une bicyclette en mouvement (1), en utilisant un système de positionnement;
- une seconde partie d'acquisition (10) configurée pour acquérir une information en relation avec la bicyclette concernant la bicyclette (1) quand l'information de position de bicyclette est acquise;
- une partie de création d'information d'itinéraire de déplacement (30) configurée pour créer une information d'itinéraire de déplacement obtenue en associant l'information de position de bicyclette avec l'information en relation avec la bicyclette;
- une partie de stockage (20) configurée pour stocker l'information d'itinéraire de déplacement dans un dispositif de stockage;
- une partie de stockage de carte configurée pour stocker une information de carte;
- une partie de création de carte de bicyclette (50) configurée pour créer une carte de bicyclette en superposant l'information d'itinéraire de déplacement sur l'information de carte stockée dans la partie de stockage de carte; et
- une partie de sortie (70) configurée pour détecter le nombre de parcours de la bicyclette (1) sur la base de l'information d'itinéraire de déplacement fusionnée par la partie de fusion (40), et afficher l'information d'itinéraire de déplacement sur un dispositif d'affichage avec différentes couleurs ou différents niveaux de transparence de l'itinéraire de déplacement, en dépendance d'au moins le nombre de parcours de la bicyclette (1),
dans lequel lesdits un ou plusieurs seconds appareils incluent une partie de fusion (40) configurée pour fusionner des morceaux d'information d'itinéraire de déplacement créés par la pluralité de premiers appareils (2),
dans lequel les morceaux d'information d'itinéraire de déplacement concernent des cyclistes différents, dans lequel la partie de fusion (40) est configurée pour diviser les itinéraires de déplacement en sections à un point de division où deux itinéraires de déplacement se ramifient, et pour créer une information d'itinéraire de déplacement pour chaque section.

14. Système selon la revendication 13,
dans lequel le premier appareil (2) et le second appareil sont connectés l'un à l'autre via un réseau (4).

15. Système selon la revendication 13,
dans lequel le second appareil est prévu dans un appareil serveur (3) connecté au premier appareil (2) à titre de terminal client via le réseau (4).

16. Système selon la revendication 14,
dans lequel le second appareil inclut un ordinateur personnel (6) configuré pour être capable d'être connecté au réseau (4).

17. Programme lisible à l'ordinateur qui permet à un ordinateur (6) d'exécuter:
- un premier processus d'acquisition consistant à acquérir une information de position de bicyclette concernant une bicyclette en mouvement (1), en utilisant un système de positionnement; et
- un second processus d'acquisition consistant à acquérir une information en relation avec la bicyclette concernant la bicyclette (1) quand l'information de position de bicyclette est acquise;
**caractérisé en ce que**
le programme lisible à l'ordinateur est adapté à permettre à l'ordinateur (6) d'exécuter:
- un processus de création d'information d'itinéraire de déplacement consistant à créer une information d'itinéraire de déplacement indiquant un itinéraire de déplacement sur lequel circule la bicyclette (1) en associant l'information de position de bicyclette à l'information en relation avec la bicyclette;
- un processus de stockage consistant à stocker l'information d'itinéraire de déplacement dans un dispositif de stockage;
- un processus de stockage de carte consistant à stocker une information de carte;
- un processus de fusion consistant à fusionner des morceaux d'information d'itinéraire de déplacement créés par différents appareils de traitement d'information (2), les morceaux d'information d'itinéraire de déplacement concernant différents cyclistes, dans lequel l'étape de fusion est configurée pour diviser les itinéraires de déplacement en sections à un point de division où deux itinéraires de déplacement se ramifient, et pour créer une information d'itinéraire de déplacement pour chaque section;
- un processus de création de carte de bicyclette consistant à créer une carte de bicyclette en superposant l'information d'itinéraire de déplacement fusionnée par le processus de fusion, sur l'information de carte stockée par le processus de stockage de carte; et
- un processus de sortie consistant à détecter le nombre de parcours de la bicyclette (1) sur la base de l'information d'itinéraire de déplacement fusionnée par le processus de fusion, et afficher l'information d'itinéraire de déplacement sur un dispositif d'affichage avec différentes couleurs ou différents niveaux de transparence de l'itinéraire de déplacement, en dépendance d'au moins le nombre détecté de parcours de la bicyclette (1), afin de permettre à un cycliste de classifier la fréquence des parcours de la bicyclette (1) sur la base de la carte de bicyclette créée par le processus de création de carte de bicyclette.
